(19) **Europäisches Patentamt / European Patent Office / Office européen des brevets**

(11) **EP 3 039 921 B1**

(12) # FASCICULE DE BREVET EUROPEEN

(45) Date de publication et mention de la délivrance du brevet:
**17.05.2017 Bulletin 2017/20**

(21) Numéro de dépôt: **13766584.0**

(22) Date de dépôt: **29.08.2013**

(51) Int Cl.:
*H04W 52/14* (2009.01)   *H04W 52/24* (2009.01)

(86) Numéro de dépôt international:
**PCT/FR2013/000223**

(87) Numéro de publication internationale:
**WO 2015/028723 (05.03.2015 Gazette 2015/09)**

(54) **PROCÉDÉ DE DÉTERMINATION DE VALEURS DE PARAMÈTRES POUR LE CONTRÔLE DE LA PUISSANCE D'ÉMISSION D'UN ÉQUIPEMENT D'UTILISATEUR**

VERFAHREN ZUM DEFINIEREN VON PARAMETERWERTEN ZUR SENDELEISTUNGSREGELUNG EINES TEILS EINER BENUTZERVORRICHTUNG

METHOD FOR DEFINING PARAMETER VALUES FOR CONTROLLING THE TRANSMISSION POWER OF A PIECE OF USER EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.07.2016 Bulletin 2016/27**

(73) Titulaire: **AIRBUS DS SAS**
**78990 Elancourt (FR)**

(72) Inventeurs:
• **GRUET, Christophe**
**F-78180 Montigny Le Bretonneux (FR)**

• **MONTAIGNE, François**
**F-59000 LILLE (FR)**
• **SCHIEL, Jean-Christophe**
**F-78310 Coignieres (FR)**
• **PHILIPPE, Guy**
**F-78310 MAUREPAS (FR)**

(74) Mandataire: **Cabinet Camus Lebkiri**
**25 rue de Maubeuge**
**75009 Paris (FR)**

(56) Documents cités:
**EP-A1- 2 101 418    US-A1- 2012 322 494**

**Description**

La présente invention concerne un procédé de détermination de valeurs de paramètres pour le contrôle de la puissance d'équipements d'utilisateurs dans un réseau cellulaire de télécommunication et une station de base et un programme d'ordinateur pour la mise en oeuvre de ce procédé. L'invention concerne aussi un réseau cellulaire de télécommunication.

Un réseau cellulaire de télécommunication comprend de manière connue une pluralité de stations de base, agencées chacune pour émettre des signaux sur une surface radiante définissant une cellule, et d'équipements d'utilisateurs configurés pour communiquer avec la station de base d'une cellule dans laquelle ils sont situés.

Ainsi, lors d'une communication, un équipement d'utilisateur situé dans une cellule d'une station de base peut recevoir des signaux émis par cette station et émettre des signaux vers cette station. Un équipement d'utilisateur peut se trouver simultanément dans une pluralité de cellules et recevoir ainsi des signaux des différentes stations de base correspondantes. Dans ce cas, l'équipement d'utilisateur communique à travers le réseau via l'une des cellules dans lesquelles il se situe, cette cellule étant alors appelée cellule de service et l'équipement d'utilisateur étant dit servi par la station de base de cette cellule ou connecté à la station de base de cette cellule. Les cellules définies par les stations de base voisines desquelles l'équipement d'utilisateur reçoit des signaux mais via lesquelles il ne communique pas à travers le réseau cellulaire sont alors dites non-servantes.

Certains des signaux émis par une station de base à destination des équipements d'utilisateurs situés dans la cellule correspondante comprennent des messages comportant des valeurs de paramètres de contrôle de la puissance d'émission de ces équipements d'utilisateurs. Afin d'émettre des signaux à destination de la station de base d'une cellule dans laquelle il se situe, un équipement d'utilisateur doit préalablement adapter sa puissance d'émission à partir de ces valeurs.

Il est connu dans un réseau cellulaire de télécommunication, par exemple du type « Long-Term Evolution » (LTE), de déterminer pour chaque station de base les valeurs de ces paramètres de contrôle lors de la planification du réseau, c'est-à-dire pour une configuration déterminée et fixe du réseau. Les valeurs ainsi prédéterminées sont alors connues de chaque station de base lors de la mise en service du réseau. Par la suite, lorsque le réseau est en service, ces valeurs prédéterminées sont périodiquement diffusées par chaque station de base dans des messages, codés dans des signaux émis par la station, à destination des équipements d'utilisateurs situés dans sa cellule. Les demandes de brevet EP2101418 et US 2012/0322494 divulguent des procédés de détermination des paramètres pour le contrôle de la puissance d'émission d'un ensemble d'équipement d'utilisateur.

Cependant, un problème se pose lorsqu'une station de base du réseau tombe en panne ou bien lorsqu'une nouvelle station de base doit être connectée au réseau ou bien encore lorsqu'une ou plusieurs stations de base sont mobiles les unes par rapport aux autres, comme cela peut être le cas, par exemple, dans un réseau cellulaire de télécommunication du type « Professional Mobile Radio » (PMR).

Dans ce cas, les valeurs des paramètres de contrôle qui ont été prédéterminées pour la configuration d'origine du réseau et qui sont diffusées par chaque station de base du réseau peuvent alors être incorrectes. En d'autres termes, la puissance d'émission des équipements d'utilisateurs peut ne plus être nécessairement adaptée dans certaines cellules. Ceci peut notamment provoquer des interférences intempestives entre les équipements d'utilisateurs et/ou les cellules voisines du réseau, entraînant alors des disfonctionnements du réseau.

La présente invention, qui est définie par les revendications indépendantes, a pour objet de remédier à ces inconvénients et, notamment, d'éviter les interférences provoquées par une modification de la configuration ou de l'architecture du réseau cellulaire de télécommunication, c'est-à-dire lorsque le nombre et/ou le positionnement des stations de base du réseau varie(nt).

A cet effet, l'invention concerne un procédé de détermination d'au moins une valeur de paramètre pour le contrôle de la puissance d'émission d'un ensemble d'équipement d'utilisateur servi par une cellule définie par une station de base d'un réseau cellulaire de télécommunication, caractérisé en ce qu'il comprend, pour la station de base, les étapes de :

- réception, de la part de l'ensemble d'équipement d'utilisateur situé dans la cellule définie par la station de base, d'un ensemble de valeur d'atténuation comprenant respectivement par équipement d'utilisateur une valeur d'atténuation d'un signal émis par la station de base et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;
- détermination, à partir de l'ensemble de valeur d'atténuation reçu, d'une valeur d'au moins un paramètre de contrôle de la puissance d'émission; et
- envoi, à destination de l'ensemble d'équipement d'utilisateur servi par la cellule définie par la station de base, de la valeur du paramètre de contrôle déterminée pour adapter la puissance d'émission de l'ensemble d'équipement d'utilisateur.

L'ensemble d'équipement d'utilisateur peut comprendre au moins un équipement d'utilisateur.

Ainsi, la station de base reçoit, de la part du ou des équipements d'utilisateurs situés dans sa cellule, une valeur d'atténuation d'un signal émis par elle-même et éventuellement une ou plusieurs valeurs d'un ou plusieurs signaux émis par une ou plusieurs stations de base de cellules non-servantes. Par le terme « cellule non-servante », on entend une cellule dont un équipement d'utilisateur reçoit des signaux, par exemple une cellule voisine, mais par laquelle il n'est pas servi ou à laquelle il n'est pas connecté, c'est-à-dire par laquelle il ne communique pas à travers le réseau cellulaire de télécommunication.

La station de base émet la ou les valeurs de paramètres de contrôle dans des signaux à destination de tout équipement d'utilisateur qui serait situé dans sa cellule et qui serait servi par celle-ci de sorte qu'il puisse ensuite les utiliser. En d'autres termes, la station de base diffuse les valeurs dans des signaux qui peuvent alors être reçus par le ou les équipements d'utilisateurs situés dans sa cellule et qui reçoivent des signaux de la station de base, c'est-à-dire sous couverture de la station de base.

Ainsi, la présente invention permet à une station de base du réseau de déterminer dynamiquement les valeurs des paramètres de contrôle lors d'un changement d'architecture ou de configuration du réseau. Les valeurs des paramètres ne sont ainsi plus prédéterminées et constantes, mais sont désormais variables et adaptées à l'architecture ou la configuration du réseau. Ainsi, par exemple, lorsqu'une station de base du réseau cellulaire de télécommunication est mobile par rapport à une autre, chacune des deux stations peut d'abord recevoir, par exemple périodiquement, de la part du ou des équipements d'utilisateurs situés dans sa cellule, des valeurs d'atténuation de signaux reçus par le ou les équipements d'utilisateurs de l'une, de l'autre ou des deux stations de base. Chaque station de base peut ensuite déterminer puis communiquer aux équipements d'utilisateurs situés dans sa cellule de nouvelles valeurs de paramètres de contrôle à utiliser pour adapter leur niveau de puissance d'émission. Une telle adaptation dynamique permet de modifier aisément l'architecture ou la configuration du réseau tout en tenant compte des interférences susceptibles d'être causées par de telles modifications.

De préférence, le procédé comprend une étape préliminaire d'envoi, à destination de l'ensemble d'équipement d'utilisateur servi par la cellule définie par la station de base, d'une requête d'obtention de l'ensemble de valeur d'atténuation comprenant respectivement par équipement d'utilisateur une valeur d'atténuation d'un signal émis par la station de base et reçu par l'équipement utilisateur et, si l'équipement utilisateur est également situé dans au moins une cellule non servante, une valeur d'atténuation d'un signal émis par la station de base de la cellule non servante et reçu par l'équipement d'utilisateur.

Avantageusement, la requête comprend une information de fréquence d'envoi de valeurs d'atténuation d'un signal par les équipements d'utilisateurs de sorte, pour la station de base, de recevoir périodiquement lesdites valeurs d'atténuation et ainsi adapter rapidement les valeurs des paramètres de contrôle lorsqu'un changement de configuration ou d'architecture du réseau cellulaire de télécommunication se produit. La requête peut en outre comprendre un seuil de valeur d'atténuation au-delà duquel les équipements d'utilisateurs envoient la ou lesdites valeurs d'atténuation à la station de base.

De préférence, l'atténuation est la perte de trajet ou de parcours, connue en anglais sous le terme de « path loss », d'un signal entre la station de base et un équipement d'utilisateur de sa cellule. Par le terme « perte de trajet », on entend l'atténuation ou l'affaiblissement de propagation d'un signal dans l'espace entre la station de base et un équipement d'utilisateur de sa cellule. La perte de trajet se définit comme étant le rapport de la puissance reçue par un équipement d'utilisateur sur la puissance émise par une station de base. Ainsi, connaissant la puissance d'émission des stations de bases voisines, un équipement d'utilisateur peut déterminer la perte de trajet à partir de la puissance reçue d'un signal émis par une station de base et reçu par ledit équipement d'utilisateur.

Selon un mode de réalisation, l'étape de détermination comprend les étapes de :

- sélection d'une valeur d'atténuation maximum $PL_{MAx}$ parmi un ensemble de valeur d'atténuation d'au moins un signal émis par la station de base et reçu par chaque équipement d'utilisateur servi par la station de base,
- calcul, pour chaque équipement d'utilisateur servi par la station de base, de la ou des différences entre la valeur d'atténuation d'un signal émis par chacune des stations de base des cellules non-servantes dudit équipement d'utilisateur et reçu par ledit équipement d'utilisateur et la valeur d'atténuation d'un signal émis par la station de base et reçu par ledit équipement d'utilisateur,

- sélection du minimum $\Delta PL_{MIN}$ entre les valeurs de différences calculées pour tous les équipements utilisateurs servis par la station de base,
- calcul d'un rapport $SINR_{MIN}$ selon la formule $SINR_{MIN} = SINR_0 + \Delta PL_{MIN}$, où $SINR_0$ est une constante prédéterminée, par exemple égale à environ -3dB,
- calcul d'une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{MAX}} \; ,$$

où $SINR_{MAX}$ et $PL_{MIN}$ sont des constantes prédéterminées,
- calcul d'une valeur d'un second paramètre de contrôle de la puissance d'émission des équipements d'utilisateurs servis par la station de base selon la formule :

$$P_0 = SINR_{MIN} + (1-\alpha)PL_{MAX} + N_{thermal} \; .$$

$N_{thermal}$ est une valeur constante, par exemple de l'ordre de -117,5 dBm, correspondant au bruit thermique.

$SINR_{MAX}$ correspond au rapport signal sur bruit maximal attendu pour un équipement d'utilisateur au plus proche de la station de base 2. La valeur de $SINR_{MAX}$ peut être prédéterminée et constante, par exemple égale à 25db.

$PL_{MIN}$ peut avoir une valeur prédéterminée et constante qui correspond à la valeur de perte de trajet la plus petite attendue pour l'équipement utilisateur le plus proche de la station de base 2, par exemple 50 dB.

$SINR_0$ est une valeur constante prédéterminée, par exemple égale à environ -3dB.

Dans un mode de réalisation particulier du procédé selon l'invention, $\alpha = 1 - \frac{SINR_{MIN} - SINR_{MAX}}{PL_{MIN} - \beta . PL_{MAX}} \; ,$ où $\beta$ est un coefficient de correction prédéterminé connu de la station de base supérieur à un, par exemple de l'ordre de 1,5.

Dans un mode de réalisation alternatif, $\alpha = 1 - \frac{SINR_{MIN} - SINR_{MAX}}{PL_{MIN} - PL_{MAX}O}$ Où $PL_{MAX}O = $ MAX($PL_{MAX}$, $PL_{CONFIGMAX}$), $PL_{CONFIGMAX}$ étant une valeur préconfigurée dans la station de base représentative du $PL_{MAX}$ que l'on cherche à assurer au niveau de la station de base.

Selon un mode de réalisation alternatif du procédé selon l'invention, l'étape de détermination comprend les étapes de :

- sélection des k plus grandes valeurs d'atténuation parmi un ensemble de valeur d'atténuation d'au moins un signal émis par la station de base et reçu par chaque équipement d'utilisateur servi par la station de base,
- calcul de la valeur d'atténuation moyenne $PL_{AVG}$ des k plus grandes valeurs d'atténuation sélectionnées,
- calcul, pour chaque équipement d'utilisateur servi par la station de base, de la ou des différences entre la valeur d'atténuation d'un signal émis par chacune des stations de base des cellules non-servantes dudit équipement d'utilisateur et reçu par ledit équipement d'utilisateur et la valeur d'atténuation d'un signal émis par la station de base et reçu par ledit équipement d'utilisateur,
- sélection des k plus petites différences calculées,
- calcul de la moyenne $\Delta PL_{AVG}$ des k différences sélectionnées,
- calcul d'un rapport $SINR_{MIN}$ selon la formule $SINR_{MIN} = SINR_0 + \Delta PL_{AVG}$, où $SINR_0$ est une constante prédéterminée,
- calcul d'une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{AVG}} \; ,$$

où $SINR_{MAX}$ et $PL_{MIN}$ sont des
constantes prédéterminées,
- calcul d'une valeur d'un second paramètre de contrôle de la puissance d'émission des équipements d'utilisateurs servis par la station de base selon la formule :

$$P_0 = SINR_{MIN} + (1 - \alpha)PL_{AVG} + N_{thermal} \, ,$$

où $N_{thermal}$ est une constante prédéterminée, par exemple de l'ordre de -117,5 dBm, correspondant au bruit thermique.

Avantageusement,   $\alpha = 1 - \dfrac{SINR_{MIN} - SINR_{MAX}}{PL_{MIN} - \beta . PL_{AVG}}$,   où $\beta$ est un coefficient de correction prédéterminé connu de la station de base, supérieur à un, par exemple de l'ordre de 1,5.

Selon un mode de réalisation du procédé selon l'invention, $PL_{MAX}$ peut être une valeur constante prédéterminée.

L'étape d'envoi du procédé selon l'invention peut ainsi comprendre l'envoi des première et seconde valeurs de paramètres de contrôle ainsi calculées.

Dans un mode de réalisation particulier du procédé selon l'invention, les étapes de détermination et d'envoi sont réalisées pour un sous-ensemble d'équipements utilisateurs parmi l'ensemble des équipements d'utilisateurs situés dans la cellule de la station de base. Ainsi, par exemple, lorsque la majorité des équipements d'utilisateurs sont proches de la station de base et/ou éloignés des stations de base des cellules voisines, c'est à dire qu'ils ne sont pas potentiellement une source d'interférences pour celles-ci, leur puissance d'émission peut être configurées différemment, par exemple être plus élevée, que celle d'un ensemble d'équipement d'utilisateur situés à l'intersection de la cellule et d'une cellule voisine et dont la puissance d'émission doit être notablement réduite selon l'invention pour les empêcher d'être une source d'interférences.

L'invention concerne aussi une station de base, pour la mise en oeuvre du procédé tel que défini ci-dessus, comprenant :

-   un module de réception configuré pour recevoir, de la part d'un ensemble d'équipement d'utilisateur servi par la cellule définie par la station de base, d'un ensemble de valeur d'atténuation comprenant respectivement par équipement d'utilisateur une valeur d'atténuation d'un signal émis par au moins la station de base et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;
-   un module de détermination configuré pour déterminer, à partir de l'ensemble de valeur d'atténuation reçu, une valeur d'au moins un paramètre de contrôle de la puissance d'émission; et
-   un module d'émission configuré pour envoyer, à destination de l'ensemble d'équipement d'utilisateur servi par la cellule définie par la station de base, la valeur de paramètre de contrôle déterminée pour adapter la puissance d'émission de l'ensemble d'équipement d'utilisateur.

De préférence, le module d'envoi est configuré en outre pour envoyer, à destination des équipements d'utilisateurs servis par la cellule définie par la station de base, une requête d'obtention de valeur d'atténuation d'un signal émis par au moins une station de base et reçus par lesdits équipements d'utilisateurs.

Avantageusement, le module d'envoi est configuré pour envoyer la requête périodiquement.

De préférence, le module de détermination est en outre configuré pour:

-   sélectionner une valeur d'atténuation maximum $PL_{MAX}$ parmi un ensemble de valeur d'atténuation d'au moins un signal émis par la station de base et reçu par chaque équipement d'utilisateur servi par la station de base,
-   calculer, pour chaque équipement d'utilisateur servi par la station de base, une ou des différences entre la valeur d'atténuation d'un signal émis par chacune des stations de base des cellules non-servantes dudit équipement d'utilisateur et reçu par ledit équipement d'utilisateur et la valeur d'atténuation d'un signal émis par la station de base et reçu par ledit équipement d'utilisateur,
-   sélectionner le minimum $\Delta PL_{MIN}$ entre les valeurs de différences calculées pour tous les équipements utilisateurs servis par la station de base,
-   calculer un rapport $SINR_{MIN}$ selon la formule $SINR_{MIN} = SINR_0 + \Delta PL_{MIN}$, où $SINR_0$ est une constante prédéterminée,
-   calculer une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{MAX}} \, ,$$

où $SINR_{MAX}$ et $PL_{MIN}$ sont des constantes prédéterminées,
- calculer une valeur d'un second paramètre de contrôle de la puissance d'émission des équipements d'utilisateurs servis par la station de base selon la formule :

$$P_0 = SINR_{MIN} + (1 - \alpha)PL_{MAX} + N_{thermal} \, ,$$

où $N_{thermal}$ est une constante prédéterminée, par exemple de l'ordre de -117,5 dBm, correspondant au bruit thermique.

De manière alternative, le module de détermination est configuré pour :

- sélectionner les k plus grandes valeurs d'atténuation parmi un ensemble de valeur d'atténuation d'au moins un signal émis par la station de base et reçu par chaque équipement d'utilisateur servi par la station de base,
- calculer la valeur d'atténuation moyenne $PL_{AVG}$ des k plus grandes valeurs d'atténuation sélectionnées,
- calculer, pour chaque équipement d'utilisateur servi par la station de base, une ou des différences entre la valeur d'atténuation d'un signal émis par chacune des stations de base des cellules non-servantes dudit équipement d'utilisateur et reçu par ledit équipement d'utilisateur et la valeur d'atténuation d'un signal émis par la station de base et reçu par ledit équipement d'utilisateur,
- sélectionner des k plus petites différences calculées,
- calculer la moyenne $\Delta PL_{AVG}$ des k différences sélectionnées,
- calculer un rapport $SINR_{MIN}$ selon la formule $SINR_{MIN} = SINR_0 + \Delta PL_{AVG}$, où $SINR_0$ est une constante prédéterminée,
- calculer une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{AVG}} \, ,$$

où $SINR_{MAX}$ et $PL_{MIN}$ sont des constantes prédéterminées,
- calculer une valeur d'un second paramètre de contrôle de la puissance d'émission des équipements d'utilisateurs servis par la station de base selon la formule :

$$P_0 = SINR_{MIN} + (1 - \alpha)PL_{AVG} + N_{thermal} \, ,$$

où $N_{thermal}$ est une constante prédéterminée, par exemple de l'ordre de -117,5 dBm, correspondant au bruit thermique.

L'invention concerne aussi un support lisible par un ordinateur stockant des instructions exécutables par l'ordinateur et dont l'exécution permet la mise en oeuvre du procédé tel que défini ci-dessus.

De manière avantageuse, le ou les équipements d'utilisateurs sont connectés à la station de base.

L'invention concerne aussi un réseau cellulaire de télécommunication, pour la mise en oeuvre du procédé tel que défini ci-dessus, comprenant :

- au moins une station de base telle que définie ci-dessus comprenant chacune :

  - un module de réception configuré pour recevoir, de la part d'un ensemble d'équipement d'utilisateur servi par la cellule définie par la station de base, d'un ensemble de valeur d'atténuation comprenant respectivement par équipement d'utilisateur une valeur d'atténuation d'un signal émis par au moins la station de base et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;

- un module de détermination configuré pour déterminer, à partir de l'ensemble de valeur d'atténuation reçu, une valeur d'au moins un paramètre de contrôle de la puissance d'émission ; et

- un module d'émission configuré pour envoyer, à destination de l'ensemble d'équipement d'utilisateur servi par la cellule définie par la station de base, la valeur de paramètre de contrôle déterminée pour adapter la puissance d'émission de l'ensemble d'équipement d'utilisateur; et,

- un ensemble d'équipement d'utilisateur servi parla cellule de la station de base l'ensemble d'équipement d'utilisateur comprenant au moins un équipement d'utilisateur configuré pour:

- recevoir des signaux de la station de base et éventuellement des stations de bases voisines,

- déterminer au moins une valeur d'atténuation à partir des signaux reçus,

- envoyer la valeur d'atténuation déterminée à la station de base,

- recevoir une valeur de paramètre de contrôle de sa puissance d'émission, et

- adapter sa puissance d'émission à partir de la valeur de paramètre de contrôle reçue.

De préférence, chaque équipement d'utilisateur d'une cellule envoie spontanément et/ou périodiquement, à la station de base d'une cellule dans laquelle il est situé, des valeurs d'atténuation de signaux reçus de la station de base et éventuellement des stations de bases voisines.

L'invention concerne aussi un support lisible par un ordinateur stockant des instructions exécutables par l'ordinateur et dont l'exécution permet la mise en oeuvre du procédé tel que défini ci-dessus.

D'autres caractéristiques et avantages de l'invention apparaîtront lors de la description qui suit faite en regard des figures annexées données à titre d'exemples non limitatifs et dans lesquelles des références identiques sont données à des objets semblables.

La figure 1 représente schématiquement un réseau cellulaire de télécommunication comprenant trois stations de base selon l'invention.
La figure 2 représente schématiquement une station de base selon l'invention.
La figure 3 illustre le procédé mis en oeuvre par la station de base selon l'invention.

La présente invention est illustrée ci-après en référence à un réseau cellulaire de télécommunication comprenant des stations de base mobiles sans que cela ne soit limitatif de sa portée. En effet, l'invention peut aussi trouver son application dans un réseau cellulaire de télécommunication comprenant des stations de base uniquement fixes ou bien dans un réseau cellulaire de télécommunication comprenant des stations de base à la fois fixes et mobiles, par exemple lorsqu'une nouvelle station de base est intégrée au réseau ou bien lorsque l'une des stations de base du réseau tombe en panne.

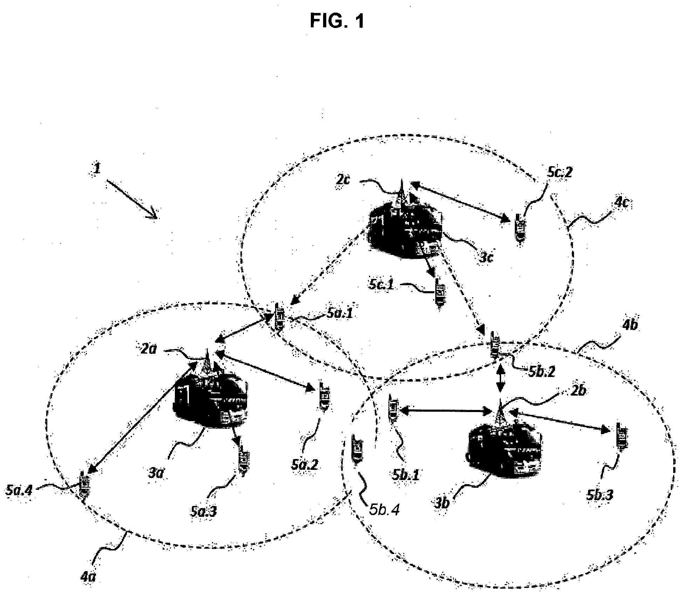

La figure 1 illustre ainsi un réseau cellulaire de télécommunication 1 comprenant trois stations de bases 2a, 2b et 2c montées sur des véhicules mobiles respectivement 3a, 3b, 3c. Un tel réseau cellulaire peut être par exemple un réseau du type 3G ou un réseau du type Long-Term Evolution (LTE) définis dans le cadre du 3rd Generation Partnership Project (3GPP). Dans un tel cas, les stations de base peuvent être, par exemple, des NodeB ou eNodeB définis aussi dans le cadre du 3rd Generation Partnership Project (3GPP).

La station de bases 2a est agencée pour émettre des signaux sur une surface radiante définissant une cellule 4a et pour recevoir des signaux d'équipements d'utilisateurs situés dans la cellule 4a. De manière similaire, la station de bases 2b est agencée pour émettre des signaux sur une surface radiante définissant une cellule 4b et pour recevoir des signaux d'équipements d'utilisateurs situés dans la cellule 4b. De manière similaire encore, la station de bases 2c est agencée pour émettre des signaux sur une surface radiante définissant une cellule 4c et pour recevoir des signaux d'équipements d'utilisateurs situés dans la cellule 4c.

Comme illustré par la figure 1, le réseau cellulaire de télécommunication 1 comprend :

- des équipements d'utilisateurs 5a.1, 5a.2, 5a.3, 5a.4 situés dans la cellule 4a et aptes à communiquer avec la station de base 2a ;

- des équipements d'utilisateurs 5b.1, 5b.2, 5b.3, 5b.4 situés dans la cellule 4b et aptes à communiquer avec la station de base 2b, et ;

- des équipements d'utilisateurs 5c.1, 5c.2 situés dans la cellule 4c et communiquant avec la station de base 2c.

Les équipements d'utilisateurs 5a.1, 5a.2, 5a.3, 5a.4 sont ici servis par ou connecté à la station de base 2a. De manière similaire, les équipements d'utilisateurs 5b.1, 5b.2, 5b.3, 5b.4 sont servis par la station de base 2b et les équipements d'utilisateurs 5c.1, 5c.2 sont servis par la station de base 2c. L'équipement d'utilisateur 5a.1 est aussi situé dans la cellule 4c couverte par la station de base 2c et peut par conséquent recevoir des signaux de cette station 2c et en déterminer la perte de trajet correspondante, même si cette cellule 4c est une cellule non-servante pour l'équipement d'utilisateur 5a.1. De manière similaire, l'équipement d'utilisateur 5b.2 est aussi situé dans la cellule 4c couverte par la station de base 2c et peut par conséquent recevoir des signaux de cette station 2c et en déterminer la perte de trajet correspondante, même si cette cellule 4c est une cellule non-servante pour l'équipement d'utilisateur 5b.2. De manière similaire, l'équipement d'utilisateur 5b.4 est situé dans la cellule 4a couverte par la station de base 2a et peut par conséquent recevoir des signaux de cette station 2a et en déterminer la perte de trajet correspondante, même si cette cellule 4a est une cellule non-servante pour l'équipement d'utilisateur 5b.4.

De tels équipements d'utilisateurs sont illustrés sur la figure 1 par des équipements d'utilisateurs mobiles. Il va de soi que les équipements d'utilisateurs peuvent à la fois être des équipements d'utilisateurs mobiles et/ou fixes.

Un équipement d'utilisateur peut se situer simultanément dans une pluralité de cellules. Ainsi, comme illustré par la figure 1, l'équipement d'utilisateur 5a.1 est situé à la fois dans la cellule 4a et dans la cellule 4c et est servi par la station de base 2a de la cellule 4a, la cellule 4c étant une cellule non-servante de l'équipement d'utilisateur 5a.1. De même, l'équipement d'utilisateur 5b.4 est situé à la fois dans la cellule 4b et dans la cellule 4a et est servi par la cellule 4b, la cellule 4a étant une cellule non-servante de l'équipement d'utilisateur 5b.4. De même, l'équipement d'utilisateur 5b.2 est situé à la fois dans la cellule 4b et dans la cellule 4c et est servi par la cellule 4b, la cellule 4c étant une cellule non-servante de l'équipement d'utilisateur 5b.2.

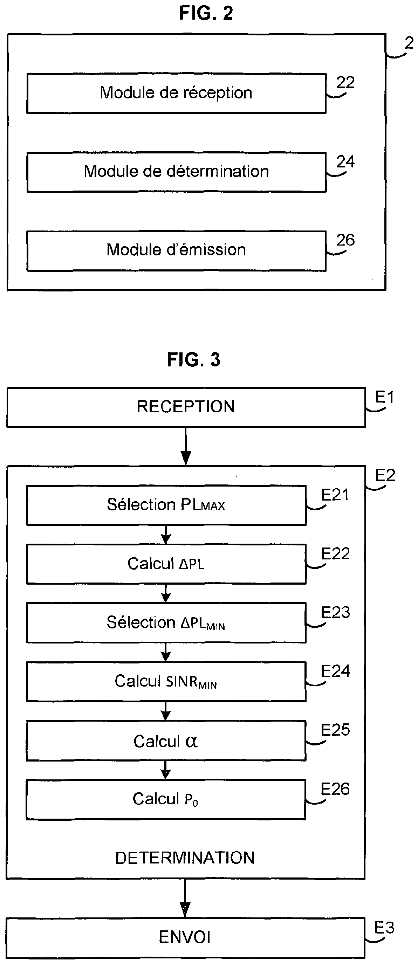

La station de base selon l'invention, illustrée par la figure 2, comprend un module de réception 22, un module de détermination 24 et un module d'émission 26.

Le module de réception 22 est configuré pour recevoir, de la part d'au moins un équipement d'utilisateur situé dans la cellule définie par la station de base, au moins une valeur d'atténuation d'un signal émis par au moins une station de base. Ainsi, la station de base reçoit, de la part du ou des équipements d'utilisateurs situés dans sa cellule, une valeur d'atténuation d'un signal émis par elle-même et éventuellement une ou plusieurs valeurs d'un ou plusieurs signaux émis par une ou plusieurs stations de base de cellules non-servantes.

Le module de détermination 24 est configuré pour déterminer, à partir de la valeur d'atténuation reçue, une valeur d'au moins un paramètre de contrôle de la puissance d'émission des signaux à émettre par le ou les équipements d'utilisateurs situés dans la cellule.

Dans une forme de réalisation de la station de base 2 selon l'invention, le module de détermination 24 est en outre configuré pour :

- sélectionner la perte de trajet maximum $PL_{MAX}$ parmi l'ensemble des pertes de trajet reçues entre la station de base et chaque équipement d'utilisateur servi par la station de base,
- calculer, pour chaque équipement d'utilisateur servi par la station de base, la ou les différences entre la perte de trajet entre chacune des stations de base des cellules non-servantes dudit équipement d'utilisateur et ledit équipement d'utilisateur et la perte de trajet entre la station de base et ledit équipement d'utilisateur,
- sélectionner le minimum $\Delta PL_{MIN}$ entre les valeurs de différences calculées pour tous les équipements utilisateurs servis par la station de base,
- calculer $SINR_{MIN}$ selon la formule $SINR_{MIN} = SINR_0 + \Delta PL_{MIN}$,
- calculer une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{MAX}} \ ,$$

- calculer une valeur d'un second paramètre de contrôle de la puissance d'émission des équipements d'utilisateurs servis par la station de base selon la formule :

$$P_0 = SINR_{MIN} + (1 - \alpha)PL_{MAX} + N_{thermal}$$

où Nthermal est une valeur constante, par exemple de l'ordre de -117,5 dBm, correspondant au bruit thermique.

Le module d'émission 26 est configuré pour envoyer, par exemple périodiquement, à destination du ou des équipements d'utilisateurs situés dans sa cellule, que celle-ci soit servante ou non-servante desdits équipements d'utilisateurs, un signal pour déterminer dans chaque équipement d'utilisateur une valeur d'atténuation. En se référant à l'exemple de la figure 1, le module d'émission de la station de base 2a, envoie périodiquement à destination des équipements utilisateurs 5a.1, 5a.2, 5a.3, 5a.4 et 5b.4 un signal.

Le module d'émission 26 est en outre configuré pour envoyer, à destination du ou des équipements d'utilisateurs situés dans la cellule définie par la station de base, la valeur de paramètre de contrôle déterminée par le module de détermination 24. En se référant à l'exemple de la figure 1, le module d'émission de la station de base 2a, envoie à destination des équipements utilisateurs 5a.1, 5a.2, 5a.3 et 5a.4, la valeur de paramètre de contrôle déterminée.

Dans une forme de réalisation particulière de la station de base 2 selon l'invention, le module d'émission 26 est en outre configuré pour envoyer, par exemple périodiquement, à destination du ou des équipements d'utilisateurs situés dans sa cellule et servis par celle-ci, une requête d'obtention d'au moins une valeur d'atténuation d'un signal émis par au moins une station de base et reçus par lesdits équipements d'utilisateurs.

Avantageusement, la requête comprend une information de fréquence d'envoi de valeurs d'atténuation d'un signal par les équipements d'utilisateurs de sorte, pour la station de base, de recevoir périodiquement lesdites valeurs d'atténuation et ainsi adapter rapidement les valeurs des paramètres de contrôle lorsqu'un changement de configuration ou d'architecture du réseau cellulaire de télécommunication se produit. La requête peut en outre comprendre un seuil de valeur d'atténuation au-delà duquel les équipements d'utilisateurs envoient la ou lesdites valeurs d'atténuation à la station de base.

Le procédé selon l'invention, illustré par la figure 3 et qui va maintenant être décrit en référence aux figures 1 à 3, permet la détermination de valeurs de paramètres pour le contrôle de la puissance d'émission d'un équipement d'utilisateur dans une cellule définie par une station de base d'un réseau cellulaire de télécommunication. Le procédé est décrit ci-après pour sa mise en oeuvre par la station de base 2a illustrée par la figure 1, sans que cela ne soit limitatif de la portée de la présente invention, le procédé pouvant de même être décrit par exemple pour sa mise en oeuvre par la station de base 2b ou par la station de base 2c.

Le module d'émission 26 de la station de base 2a émet de manière périodique un signal vers les équipements d'utilisateur compris dans la cellule 4a que sont les équipements 5a.1, 5a.2, 5a.3, 5a.4 et 5b.4. A la réception du signal chaque équipement d'utilisateur détermine une valeur d'atténuation en fonction du signal reçu. De préférence, l'atténuation est la perte de trajet ou de parcours, connue en anglais sous le terme de « path loss », entre la station de base et un équipement d'utilisateur de sa cellule. Par le terme « perte de trajet », on entend l'atténuation ou l'affaiblissement de propagation d'un signal dans l'espace entre la station de base et un équipement d'utilisateur de sa cellule. La perte de trajet se définit comme étant le rapport de la puissance reçue par un équipement d'utilisateur sur la puissance émise par une station de base. Chaque équipement d'utilisateur 5a.1, 5a.2, 5a.3, 5a.4 et 5b.4 détermine une valeur de perte de trajet PL2a(5a.2), PL2a(5a.3), PL2a(5a.4), PL2a(5b.4) par rapport au signal émis par la station de base 2a. De même, l'équipement d'utilisateur 5a.1 se trouvant également dans la cellule 4c, détermine une valeur de perte de trajet PL2c(5a.1) en fonction d'un signal émis par la station de base 2c de la cellule 4c.

Dans une étape E1, le module de réception 22 de la station de base 2a reçoit, de la part de chacun des équipements d'utilisateurs 5a.2, 5a.3 et 5a.4 situés dans la cellule 4a définie par la station de base 2a, une valeur de perte de trajet PL2a(5a.2), PL2a(5a.3), PL2a(5a.4).

Lors de cette étape E1, le module de réception 22 de la station de base 2a reçoit aussi, de la part de l'équipement d'utilisateur 5a.1, une valeur de perte de trajet PL2a(5a.1) qui correspond à l'atténuation d'un signal préalablement émis par la station de base 2a et reçu par l'équipement d'utilisateur 5a.1 et une valeur de perte de trajet PL2c(5a.1) qui correspond à l'atténuation d'un signal préalablement émis par la station de base 2c et reçu par l'équipement d'utilisateur 5a.1 qui se trouve à la fois dans la cellule 4a et dans la cellule 4c.

En aparté, la valeur de perte de trajet PL2a(5b.4) déterminée par l'équipement d'utilisateur 5.b.4 est reçue par la station de base 2b servant l'équipement 5b.4.

Lors d'une étape E2, le module de détermination 24 de la station de base 2a détermine, à partir des valeurs d'atténuation reçues PL2a(5a.1), PL2c(5a.1), PL2a(5a.2), PL2a(5a.3) et PL2a(5a.4), au moins une valeur d'au moins un paramètre de contrôle de la puissance d'émission pour les équipements d'utilisateurs 5a.1, 5a.2, 5a.3 et 5a.4 situés dans la cellule 4a.

Dans une forme de réalisation particulière du procédé selon l'invention, une valeur d'un premier paramètre $\alpha$ et une valeur d'un second paramètre $P_0$ sont calculées. A cette fin, l'étape de détermination E2 comprend une étape E21 de sélection de la perte de trajet maximum $PL_{MAX}$ parmi l'ensemble des pertes de trajet reçues PL2a(5a.1), PL2a(5a.2), PL2a(5a.3) et PL2a(5a.4) entre la station de base 2a et chaque équipement d'utilisateur 5a.1, 5a.2, 5a.3 et 5a.4 servi par la station de base 2a. Ensuite, dans une étape E22, pour chaque équipement d'utilisateur 5a.1, 5a.2, 5a.3 et 5a.4 servi par la station de base 2a, le module de détermination 24 calcule les différences $\Delta PL$ entre la perte de trajet PL2c(5a.1), PL2c(5a.2), PL2c(5a.3), PL2c(5a.4) entre la station de base de la cellule 4c voisine, non-servante des équipements d'utilisateurs 5a.1, 5a.2, 5a.3 et 5a.4, et l'équipement d'utilisateur respectivement 5a.1, 5a.2, 5a.3, 5a.4, et la perte de trajet respectivement PL2a(5a.1), PL2a(5a.2), PL2a(5a.3), PL2a(5a.4) entre la station de base 2a et ledit équipement d'utilisateur respectivement 5.a1, 5a.2, 5a.3 et 5a.4. De même, le module de détermination 24 calcule les différences entre la perte de trajet PL2b(5a.1), PL2b(5a.2), PL2b(5a.3), PL2b(5a.4) entre la station de base de la cellule 4b voisine, non-servante des équipements d'utilisateurs 5a.1, 5a.2, 5a.3 et 5a.4, et l'équipement d'utilisateur respectivement 5a.1, 5a.2, 5a.3, 5a.4, et la perte de trajet respectivement PL2a(5a.1), PL2a(5a.2), PL2a(5a.3), PL2a(5a.4) entre la station de base 2a et ledit équipement d'utilisateur respectivement 5.a1, 5a.2, 5a.3 et 5a.4. Le module de détermination 24 sélectionne, dans une étape E23, le minimum $\Delta PL_{MIN}$ entre les valeurs de différences calculées [PL2c(5a.1)-PL2a(5a.1)], [PL2c(5a.2)-PL2a(5a.2)], [PL2c(5a.3)-PL2a(5a.3)], [PL2c(5a.4)-PL2a(5a.4)], [PL2b(5a.1)-PL2a(5a.1)], [PL2b(5a.2)- PL2a(5a.2)], [PL2b(5a.3)-PL2a(5a.3)], [PL2b(5a.4)-PL2a(5a.4)] pour les équipements d'utilisateurs respectivement 5a.1, 5a.2, 5a.3 et 5a.4 servis par la station de base 2a.

Le module de détermination 24 calcule ensuite, dans une étape E24, le rapport minimal $SINR_{MIN}$ (« Signal-to-Interference plus Noise Ratio » en anglais) selon l'équation : $SINR_{MIN} = SINR_0 + \Delta PL_{MIN}$, où $SINR_0$ est une constante prédéterminée connue de la station de base 2a. Ce rapport est le rapport entre la puissance d'un signal reçu et la somme des puissances des différents signaux interférant et bruits reçus.

Le module de détermination 24 calcule ensuite, dans une étape E25, une valeur du premier paramètre $\alpha$ de contrôle de la puissance des équipements d'utilisateurs 5a.1, 5a.2, 5a.3 et 5a.4 suivant la formule :

$$\alpha = 1 - \frac{SINR_{MIN} - SINR_{MAX}}{PL_{MIN} - PL_{MAX}} \; ,$$

où, dans ce mode de réalisation illustratif, la valeur de $SINR_{MAX}$ est prédéterminée, constante et égale 25db ; la valeur de $PL_{MIN}$ est prédéterminée, constante et égale à 50 dB.

Dans une étape E26, le module de détermination 24 calcule une valeur du second paramètre $P_0$ de contrôle de la puissance d'émission des équipements d'utilisateurs 5a.1, 5a.2, 5a.3, 5a.4 servis par la station de base 2a selon la formule :

$$P_0 = SINR_{MIN} + (1 - \alpha)PL_{MAX} + N_{thermal}$$

où $N_{thermal}$ est une valeur constante, par exemple de l'ordre de -117,5 dBm, correspondant au bruit thermique.

Dans une étape E3, la station de base 2a envoi, via le module d'émission 26, à destination des équipements d'utilisateurs 5a.1, 5a.2, 5a.3, 5a.4 situés dans la cellule 4a, les valeurs des paramètres $\alpha$ et $P_0$ déterminées.

Sur réception de ces paramètres, les équipements d'utilisateurs 5a.1, 5a.2, 5a.3, 5a.4 adaptent leur puissance d'émission de signaux vers la station de base 2a à partir des valeurs des paramètres $\alpha$ et $P_0$ reçues jusqu'à ce qu'ils reçoivent des nouvelles valeurs de $\alpha$ et $P_0$.

Les valeurs des paramètres $\alpha$ et $P_0$ sont envoyées aux équipements d'utilisateurs 5a.1, 5a.2, 5a.3, 5a.4 dans des messages codés dans des signaux émis par la station de base 2a.

Après avoir reçues ces valeurs des paramètres $\alpha$ et $P_0$, et en attendant d'en recevoir de nouvelles, tout équipement d'utilisateur souhaitant émettre des signaux vers la station de base de la cellule dans laquelle il se situe doit au préalable adapter sa puissance d'émission à partir de ces valeurs.

Dans le cas d'un réseau de type Long-Term Evolution (LTE), cette adaptation de puissance est réalisée par l'équipement d'utilisateur selon la formule :

$$P_{PUSCH} = \min\{P_{MAX}, 10\log(M_{PUSCH}) + P_0 + \alpha.PL\} \; [dBm]$$

où :

- $P_{MAX}$ est la puissance maximum de l'équipement d'utilisateur;
- $M_{PUSCH}$ est le nombre de blocs de ressources allouées à l'équipement d'utilisateur par la station de base à laquelle il est connecté, ces blocs de ressources permettant à l'équipement d'utilisateur d'envoyer et/ou de recevoir des données pour communiquer à travers le réseau en passant par la station de base ;
- PL est la perte de trajet entre l'équipement d'utilisateur et la station de base à laquelle il est connecté.

Dans une deuxième forme de réalisation du procédé selon l'invention, à l'étape E25,

$$\alpha = 1 - \frac{SINR_{MIN} - SINR_{MAX}}{PL_{MIN} - \beta.PL_{MAX}},$$ où $\beta$ est un coefficient de correction prédéterminé connu de la station de base supérieur à un, par exemple de l'ordre de 1,5.

Dans un mode de réalisation alternatif, $$\alpha = 1 - \frac{SINR_{MIN} - SINR_{MAX}}{PL_{MIN} - PL_{MAX}O}$$ Où $PL_{MAX}O = $ MAX($PL_{MAX}$, $PL_{CONFIGMAX}$), $PL_{CONFIGMAX}$ étant une valeur préconfigurée dans la station de base représentative du $PL_{MAX}$ que l'on cherche à assurer au niveau de la station de base.

Selon une troisième forme de réalisation alternative du procédé selon l'invention, l'étape de détermination E2 comprend :

- l'étape E21 comprenant :

  - une sélection des k plus grandes pertes de trajet parmi l'ensemble des pertes de trajet reçues entre la station de base et chaque équipement d'utilisateur servi par la station de base, et
  - un calcul de la perte de trajet moyenne $PL_{AVG}$ des k plus grandes pertes de trajet sélectionnées,

- l'étape E22 comprenant :

  - un calcul, pour chaque équipement d'utilisateur servi par la station de base, de la ou des différences entre la perte de trajet entre chacune des stations de base des cellules non-servantes dudit équipement d'utilisateur et ledit équipement d'utilisateur et la perte de trajet entre la station de base et ledit équipement d'utilisateur,
  - une sélection des k plus petites différences de pertes de trajets calculées,
  - un calcul de la moyenne $\Delta PL_{AVG}$ des k différences sélectionnées,

- l'étape E24 comprenant un calcul de $SINR_{MIN}$ selon la formule $SINR_{MIN} = SINR_0 + \Delta PL_{AVG}$,
- l'étape E25 comprenant un calcul d'une valeur d'un premier paramètre de contrôle de la puissance d'émission des équipements d'utilisateurs servis par la station de base selon la formule :

$$\alpha = 1 - \frac{SINR_{MIN} - SINR_{MAX}}{PL_{MIN} - PL_{AVG}},$$

où $SINR_{MAX}$, $SINR_{MIN}$ et $PL_{MIN}$ sont des constantes prédéterminées,
- l'étape E26 comprenant un calcul d'une valeur d'un second paramètre de contrôle de la puissance d'émission des équipements d'utilisateurs servis par la station de base selon la formule :

$$P_0 = SINR_{MIN} + (1-\alpha)PL_{AVG} + N_{thermal}$$

où $N_{thermal}$ est une valeur constante, par exemple de l'ordre de -117,5 dBm, correspondant au bruit thermique.

Avantageusement, $$\alpha = 1 - \frac{SINR_{MIN} - SINR_{MAX}}{PL_{MIN} - \beta.PL_{AVG}},$$ où $\beta$ est un coefficient de correction prédéterminé connu de la station de base, supérieur à un, par exemple de l'ordre de 1,5.

Selon un mode de réalisation du procédé selon l'invention, $PL_{MAX}$ peut être une valeur constante prédéterminée.

Dans un mode de réalisation particulier du procédé selon l'invention, il peut être décidé par la station de base qu'un nombre K1, supérieur ou égal à un, d'équipements d'utilisateurs en adjacence avec une ou plusieurs cellules voisines est faible en comparaison du nombre K2 d'équipements d'utilisateurs non adjacents à des cellules voisines (la notion d'adjacence peut se définir par exemple en fonction de la perte de trajet que ces équipements d'utilisateurs ont avec les cellules voisines, c'est-à-dire par exemple si leur perte de trajet $PL_{min}$ avec chaque cellule voisine est supérieure à un seuil prédéterminé alors l'équipement d'utilisateur n'est pas adjacent à ladite cellule voisine sinon il est adjacent).

Le seuil prédéterminé est défini tel qu'il faut une proportion d'équipement d'utilisateur K1 non négligeable par rapport à la proportion d'équipement d'utilisateur K2 afin de mettre en oeuvre le procédé de l'invention. Si le rapport K1/K2 est inférieur au seuil prédéterminé alors on peut décider d'appliquer le procédé selon l'invention aux K1 équipements d'utilisateurs et d'utiliser un procédé de contrôle de puissance dédié dit « en boucle fermée » (« closed loop power control » en anglais) pour les K2 équipements d'utilisateurs restants (traitement individualisé).

Lorsqu'une station de base est isolée, c'est-à-dire qu'il n'y a pas d'intersection de sa cellule avec une cellule voisine, la station peut détecter cet état (par exemple lorsque que les valeurs d'atténuation remontées par les équipements d'utilisateurs sont très basses, inférieures à un certain seuil), puis imposer, par exemple, $\alpha=0$ et $P_0=P_{MAX}$, de sorte que les équipements d'utilisateurs, qui ne sont pas alors une source potentielle d'interférences pour les cellules voisines, émettent à leur maximum de puissance vers la station de base.

Ainsi, le procédé selon l'invention permet la détermination de valeurs de paramètres de contrôle de la puissance d'émission d'équipements d'utilisateurs dans un réseau cellulaire de télécommunication dont l'architecture est variable, c'est-à-dire dont le nombre et/ou le positionnement des stations de base varie(nt).

**Revendications**

1.  Procédé de détermination d'au moins une valeur de paramètre pour le contrôle de la puissance d'émission d'un ensemble d'équipement d'utilisateur (5a.1, 5a.2, 5a.3, 5a.4 ; 5b.1, 5b.2, 5b.3 ; 5c.1, 5c.2) servi par une cellule (4a ; 4b ; 4c) définie par une station de base (2 ; 2a ; 2b ; 2c) d'un réseau cellulaire de télécommunication (1), ledit procédé comprenant, pour la station de base (2 ; 2a ; 2b ; 2c), les étapes de :

    - réception (E1), de la part de l'ensemble d'équipement d'utilisateur (5a.1, 5a.2, 5a.3, 5a.4 ; 5b.1, 5b.2, 5b.3 ; 5c.1, 5c.2) situé dans la cellule (4a ; 4b ; 4c) définie par la station de base (2 ; 2a ; 2b ; 2c), d'un ensemble de valeur d'atténuation comprenant respectivement par équipement d'utilisateur une valeur d'atténuation d'un signal émis par la station de base (2 ; 2a ; 2b ; 2c) et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;
    - détermination (E2), à partir de l'ensemble de valeur d'atténuation reçu, d'une valeur d'au moins un paramètre de contrôle ($\alpha$, $P_0$) de la puissance d'émission ; et
    - envoi (E3), à destination de l'ensemble d'équipement d'utilisateur servi par la cellule (4a ; 4b ; 4c) définie par la station de base (2 ; 2a ; 2b ; 2c), de la valeur du paramètre de contrôle ($\alpha$, $P_0$) déterminée pour adapter la puissance d'émission de l'ensemble d'équipement d'utilisateu r ;
    - calcul, pour chaque équipement d'utilisateur (5a.1, 5a.2, 5a.3, 5a.4 ; 5b.1, 5b.2, 5b.3 ; 5c.1, 5c.2) servi par la station de base (2; 2a ; 2b ; 2c), de la ou des différences entre la valeur d'atténuation d'un signal émis par chacune des stations de base (2; 2a ; 2b ; 2c) des cellules non-servantes (4a ; 4b ; 4c) dudit équipement d'utilisateur et reçu par ledit équipement d'utilisateur et la valeur d'atténuation d'un signal émis par la station de base (2; 2a ; 2b ; 2c) et reçu par ledit équipement d'utilisateur (5a.1, 5a.2, 5a.3, 5a.4 ; 5b.1, 5b.2, 5b.3 ; 5c.1, 5c.2);

    ledit procédé étant **caractérisé en ce qu'**il comprend les étapes de :

    - sélection d'une valeur d'atténuation maximum $PL_{MAX}$ parmi un ensemble de valeur d'atténuation d'au moins un signal émis par la station de base (2 ; 2a ; 2b ; 2c) et reçu par chaque équipement d'utilisateur (5a.1, 5a.2, 5a.3, 5a.4 ; 5b.1, 5b.2, 5b.3 ; 5c.1, 5c.2) servi par la station de base (2 ; 2a ; 2b ; 2c),
    - sélection du minimum $\Delta PL_{MIN}$ entre les valeurs de différences calculées pour tous les équipements utilisateurs (5a.1, 5a.2, 5a.3, 5a.4 ; 5b.1, 5b.2, 5b.3 ; 5c.1, 5c.2) servis par la station de base (2 ; 2a ; 2b ; 2c),
    - calcul d'un rapport $SINR_{MIN}$ selon la formule $SINR_{MIN} = SINR_0 + \Delta PL_{MIN}$, où $SINR_0$ est une constante prédéterminée,
    - calcul d'une valeur d'un premier paramètre de contrôle de la puissance d'émission des équipements d'utilisateurs (5a.1, 5a.2, 5a.3, 5a.4 ; 5b.1, 5b.2, 5b.3 ; 5c.1., 5c.2) servis par la station de base (2 ; 2a ; 2b ; 2c) selon la formule :

$$\alpha = 1 - \frac{SINR_{MIN} - SINR_{MAX}}{PL_{MIN} - \beta . PL_{MAX}} \, ,$$

où $\beta$ est un coefficient de correction prédéterminé connu de la station de base (2 ; 2a ; 2b ; 2c) et où $SINR_{MAX}$ et $PL_{MIN}$ sont des constantes prédéterminées,

- calcul d'une valeur d'un second paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$P_0 = SINR_{MIN} + (1 - \alpha)PL_{MAX} + N_{thermal},$$

où $N_{thermal}$ est une constante prédéterminée.

**2.** Procédé selon la revendication précédente **caractérisé en ce que** coefficient de correction $\beta$ est égal à 1.

**3.** Procédé de détermination d'au moins une valeur de paramètre pour le contrôle de la puissance d'émission d'un ensemble d'équipement d'utilisateur (5a.1, 5a.2, 5a.3, 5a.4 ; 5b.1, 5b.2, 5b.3 ; 5c.1, 5c.2) servi par une cellule (4a ; 4b ; 4c) définie par une station de base (2 ; 2a; 2b; 2c) d'un réseau cellulaire de télécommunication (1), ledit procédé comprenant, pour la station de base (2 ; 2a ; 2b ; 2c), les étapes de :

- réception (E1), de la part de l'ensemble d'équipement d'utilisateur (5a.1, 5a.2, 5a.3, 5a.4 ; 5b.1, 5b.2, 5b.3 ; 5c.1, 5c.2) situé dans la cellule (4a ; 4b ; 4c) définie par la station de base (2; 2a; 2b; 2c), d'un ensemble de valeur d'atténuation comprenant respectivement par équipement d'utilisateur une valeur d'atténuation d'un signal émis par la station de base (2 ; 2a ; 2b ; 2c) et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;
- détermination (E2), à partir de l'ensemble de valeur d'atténuation reçu, d'une valeur d'au moins un paramètre de contrôle ($\alpha$, $P_0$) de la puissance d'émission ; et
- envoi (E3), à destination de l'ensemble d'équipement d'utilisateur servi par la cellule (4a ; 4b ; 4c) définie par la station de base (2 ; 2a ; 2b ; 2c), de la valeur du paramètre de contrôle ($\alpha$, $P_0$) déterminée pour adapter la puissance d'émission de l'ensemble d'équipement d'utilisateur ;
- calcul, pour chaque équipement d'utilisateur (5a.1, 5a.2, 5a.3, 5a.4 ; 5b. 1, 5b.2, 5b.3 ; 5c.1, 5c.2) servi par la station de base (2; 2a ; 2b ; 2c), de la ou des différences entre la valeur d'atténuation d'un signal émis par chacune des stations de base (2; 2a ; 2b ; 2c) des cellules non-servantes (4a ; 4b ; 4c) dudit équipement d'utilisateur et reçu par ledit équipement d'utilisateur et la valeur d'atténuation d'un signal émis par la station de base (2; 2a ; 2b ; 2c) et reçu par ledit équipement d'utilisateur (5a.1, 5a.2, 5a.3, 5a.4 ; 5b.1, 5b.2, 5b.3; 5c.I, 5c.2);

ledit procédé étant **caractérisé en ce qu'**il comprend les étapes de :

- sélection des k plus grandes valeurs d'atténuation parmi un ensemble de valeur d'atténuation d'au moins un signal émis par la station de base (2 ; 2a ; 2b ; 2c) et reçu par chaque équipement d'utilisateur (5a.1, 5a.2, 5a.3, 5a.4 ; 5b.1, 5b.2, 5b.3 ; 5c.1, 5c.2) servi par la station de base (2 ; 2a ; 2b ; 2c),
- calcul de la valeur d'atténuation moyenne $PL_{AVG}$ des k plus grandes valeurs d'atténuation sélectionnées,
- sélection des k plus petites différences calculées,
- calcul de la moyenne $\Delta PL_{AVG}$ des k différences sélectionnées,
- calcul d'un rapport $SINR_{MIN}$ selon la formule $SINR_{MIN} = SINR_0 + \Delta PL_{AVG}$, où $SINR_0$ est une constante prédéterminée,
- calcul d'une valeur d'un premier paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$\alpha = 1 - \frac{SINR_{MIN} - SINR_{MAX}}{PL_{MIN} - PL_{AVG}},$$

où $SINR_{MAX}$ et $PL_{MIN}$ sont des constantes prédéterminées,

- calcule d'une valeur d'un second paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$P_0 = SINR_{MIN} + (1-\alpha)PL_{AVG} + N_{thermal} \text{ ,}$$

où $N_{thermal}$ est une constante prédéterminée.

4.  Procédé selon l'une des revendications 1 à 3, comprenant en outre une étape préliminaire d'envoi, à destination de l'ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) définie par la station de base (2 ; 2a ; 2b ; 2c), d'une requête d'obtention de l'ensemble de valeur d'atténuation comprenant respectivement par équipement d'utilisateur une valeur d'atténuation d'un signal émis par la station de base (2 ; 2a ; 2b ; 2c) et reçu par l'équipement utilisateur et, si l'équipement utilisateur est également situé dans au moins une cellule non servante, une valeur d'atténuation d'un signal émis par la station de base de la cellule non servante et reçu par l'équipement d'utilisateur.

5.  Station de base (2 ; 2a ; 2b ; 2c), pour la mise en oeuvre du procédé selon l'une des revendications 1 à 2 ou la revendication 4 dans sa dépendance à la revendication 1 ou à la revendication 2 comprenant :

    - un module de réception configuré pour recevoir, de la part d'un ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) définie par la station de base (2 ; 2a ; 2b ; 2c), d'un ensemble de valeur d'atténuation comprenant respectivement par équipement d'utilisateur une valeur d'atténuation d'un signal émis par au moins la station de base (2 ; 2a; 2b; 2c) et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;
    - un module de détermination configuré pour déterminer, à partir de l'ensemble de valeur d'atténuation reçu, une valeur d'au moins un paramètre de contrôle de la puissance d'émission ; et
    - un module d'émission configuré pour envoyer, à destination de l'ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) définie par la station de base (2 ; 2a ; 2b ; 2c), la valeur de paramètre de contrôle déterminée pour adapter la puissance d'émission de l'ensemble d'équipement d'utilisateur ; ladite station comprenant :

        - un module de sélection configuré pour sélectionner une valeur d'atténuation maximum $PL_{MAX}$ parmi un ensemble de valeur d'atténuation d'au moins un signal émis par la station de base (2 ; 2a ; 2b ; 2c) et reçu par chaque équipement d'utilisateur (5a.1, 5a.2, 5a.3, 5a.4 ; 5b.1, 5b.2, 5b.3 ; 5c.1, 5c.2) servi par la station de base (2 ; 2a ; 2b ; 2c),
        - un module de calcul configuré pour calculer, pour chaque équipement d'utilisateur (5a.1, 5a.2, 5a.3, 5a.4 ; 5b.1, 5b.2, 5b.3 ; 5c.1, 5c.2) servi par la station de base (2; 2a ; 2b ; 2c), de la ou des différences entre la valeur d'atténuation d'un signal émis par chacune des stations de base (2; 2a; 2b; 2c) des cellules non-servantes (4a ; 4b; 4c) dudit équipement d'utilisateur et reçu par ledit équipement d'utilisateur et la valeur d'atténuation d'un signal émis par la station de base (2; 2a ; 2b ; 2c) et reçu par ledit équipement d'utilisateur (5a.1, 5a.2, 5a.3, 5a.4 ; 5b.1, 5b.2, 5b.3 ; 5c.1, 5c.2),
        - un moyen de sélection configuré pour sélectionner un minimum $\Delta PL_{MIN}$ entre les valeurs de différences calculées pour tous les équipements utilisateurs (5a.1, 5a.2, 5a.3, 5a.4 ; 5b.1, 5b.2, 5b.3 ; 5c.1, 5c.2) servis par la station de base (2 ; 2a ; 2b ; 2c),
        - un moyen de calcul configuré pour calculer un rapport $SINR_{MIN}$ selon la formule $SINR_{MIN} = SINR_0 + \Delta PL_{MIN}$, où $SINR_0$ est une constante prédéterminée,
        - un moyen de calcul configuré pour calculer une valeur d'un premier paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$\alpha = 1 - \frac{SINR_{MIN} - SINR_{MAX}}{PL_{MIN} - \beta . PL_{MAX}} \text{ ,}$$

où β est un coefficient de correction prédéterminé connu de la station de base (2 ; 2a ; 2b ; 2c) et où $SINR_{MAX}$ et $PL_{MIN}$ sont des constantes prédéterminées,

- un moyen de calcul configuré pour calculer une valeur d'un second paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$P_0 = SINR_{MIN} + (1 - \alpha)PL_{MAX} + N_{thermal} \, ,$$

où $N_{thermal}$ est une constante prédéterminée.

6. Station de base (2 ; 2a ; 2b ; 2c), pour la mise en oeuvre du procédé selon la revendication 3 ou la revendication 4 dans sa dépendance à la revendication 3 comprenant :

- un module de réception configuré pour recevoir, de la part d'un ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) définie par la station de base (2; 2a ; 2b ; 2c), d'un ensemble de valeur d'atténuation comprenant respectivement par équipement d'utilisateur une valeur d'atténuation d'un signal émis par au moins la station de base (2 ; 2a; 2b; 2c) et reçu par l'équipement d'utilisateur et, si l'équipement utilisateur est également situé dans au moins une cellule non servante, une valeur d'atténuation d'un signal émis par la station de base de la cellule non servante et reçu par l'équipement d'utilisateur;

- un module de détermination configuré pour déterminer, à partir de l'ensemble de valeur d'atténuation reçu, une valeur d'au moins un paramètre de contrôle de la puissance d'émission ; et

- un module d'émission configuré pour envoyer, à destination de l'ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) définie par la station de base (2; 2a; 2b ; 2c), la valeur de paramètre de contrôle déterminée pour adapter la puissance d'émission de l'ensemble d'équipement d'utilisateur ; ladite station comprenant :

- un module de sélection configuré pour sélectionner des k plus grandes valeurs d'atténuation parmi un ensemble de valeur d'atténuation d'au moins un signal émis par la station de base (2 ; 2a ; 2b ; 2c) et reçu par chaque équipement d'utilisateur (5a.1, 5a.2, 5a.3, 5a.4 ; 5b.1, 5b.2, 5b.3 ; 5c.1, 5c.2) servi par la station de base (2 ; 2a ; 2b ; 2c),

- un module de calcul configuré pour calculer de la valeur d'atténuation moyenne $PL_{AVG}$ des k plus grandes valeurs d'atténuation sélectionnées,

- un module de calcul configuré pour calculer, pour chaque équipement d'utilisateur (5a.1, 5a.2, 5a.3, 5a.4 ; 5b.1, 5b.2, 5b.3 ; 5c.1, 5c.2) servi par la station de base (2; 2a ; 2b ; 2c), de la ou des différences entre la valeur d'atténuation d'un signal émis par chacune des stations de base (2; 2a; 2b; 2c) des cellules non-servantes (4a ; 4b ; 4c) dudit équipement d'utilisateur et reçu par ledit équipement d'utilisateur et la valeur d'atténuation d'un signal émis par la station de base (2; 2a ; 2b ; 2c) et reçu par ledit équipement d'utilisateur (5a.1, 5a.2, 5a.3, 5a.4 ; 5b.1, 5b.2, 5b.3 ; 5c.1, 5c.2),

- un module de sélection configuré pour sélectionner des k plus petites différences calculées,

- un module de calcul configuré pour calculer la moyenne $\Delta PL_{AVG}$ des k différences sélectionnées,

- un module de calcul configuré pour calculer un rapport $SINR_{MIN}$ selon la formule $SINR_{MIN} = SINR_0 + \Delta PL_{AVG}$, où $SINR_0$ est une constante prédéterminée,

- un module de calcul configuré pour calculer une valeur d'un premier paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$\alpha = 1 - \frac{SINR_{MIN} - SINR_{MAX}}{PL_{MIN} - PL_{AVG}} \, ,$$

où $SINR_{MAX}$ et $PL_{MIN}$ sont des constantes prédéterminées,

- un module de calcul configuré pour calculer une valeur d'un second paramètre de contrôle de la puissance d'émission des équipements d'utilisateurs (5a.1, 5a.2, 5a.3, 5a.4 ; 5b.1, 5b.2, 5b.3 ; 5c.1, 5c.2) servis par la station de base (2 ; 2a ; 2b ; 2c) selon la formule :

$$P_0 = SINR_{MIN} + (1-\alpha)PL_{AVG} + N_{thermal} \, ,$$

où $N_{thermal}$ est une constante prédéterminée.

**7.** Support lisible par un ordinateur stockant des instructions exécutables par l'ordinateur et dont l'exécution permet la mise en oeuvre du procédé selon l'une des revendications 1 à 4.

**8.** Réseau cellulaire de télécommunication, pour la mise en oeuvre du procédé selon la revendication 1, **caractérisé en ce qu'**il comprend :

- au moins une station de base (2 ; 2a ; 2b ; 2c) selon la revendication 5 ;
- un ensemble d'équipement d'utilisateur (5a.1, 5a.2, 5a.3, 5a.4 ; 5b.1, 5b.2, 5b.3 ; 5c.1, 5c.2) servi par la cellule (4a; 4b; 4c) de la station de base (2; 2a; 2b; 2c) l'ensemble d'équipement d'utilisateur comprenant au moins un équipement d'utilisateur configuré pour:

- recevoir des signaux de la station de base et éventuellement des stations de bases voisines (2 ; 2a ; 2b ; 2c),
- déterminer au moins une valeur d'atténuation à partir des signaux reçus,
- envoyer la valeur d'atténuation déterminée à la station de base (2 ; 2a ; 2b ; 2c),
- recevoir une valeur de paramètre de contrôle de sa puissance d'émission, et
- adapter sa puissance d'émission à partir de la valeur de paramètre de contrôle reçue.

**9.** Réseau cellulaire de télécommunication, pour la mise en oeuvre du procédé selon la revendication 3, **caractérisé en ce qu'**il comprend :

- au moins une station de base (2 ; 2a ; 2b ; 2c) selon la revendication 6 ;
- un ensemble d'équipement d'utilisateur (5a.1, 5a.2, 5a.3, 5a.4 ; 5b.1, 5b.2, 5b.3 ; 5c.1, 5c.2) servi par la cellule (4a ; 4b ; 4c) de la station de base (2 ; 2a ; 2b ; 2c) l'ensemble d'équipement d'utilisateur comprenant au moins un équipement d'utilisateur configuré pour:

- recevoir des signaux de la station de base et éventuellement des stations de bases voisines (2 ; 2a ; 2b ; 2c),
- déterminer au moins une valeur d'atténuation à partir des signaux reçus,
- envoyer la valeur d'atténuation déterminée à la station de base (2 ; 2a ; 2b ; 2c),
- recevoir une valeur de paramètre de contrôle de sa puissance d'émission, et
- adapter sa puissance d'émission à partir de la valeur de paramètre de contrôle reçue.

**Patentansprüche**

**1.** Bestimmungsverfahren wenigstens eines Parameterwertes für die Kontrolle der Ausgabeleistung einer Nutzerausrüstungsgruppe (5a.1, 5a.2, 5a.3, 5a.4; 5b.1, 5b.2, 5b.3; 5c.1, 5c.1, 5c.2), die von einer Zelle (4a; 4b; 4c) bedient wird, welche von einer Basisstation (2; 2a; 2b; 2c) eines Zelltelekommunikationsnetzes (1) definiert ist, wobei das genannte Verfahren bei der Basisstation (2; 2a; 2b; 2c) die Stufen umfasst:

- Empfang (E1) eines Satzes von Abschwächungswerten seitens der Nutzerausrüstungsgruppe (5a.1, 5a.2, 5a.3, 5a.4; 5b.1, 5b.2, 5b.3; 5c.1, 5c.2), die sich in der Zelle (4a; 4b; 4c) befindet, welche durch die Basisstation (2; 2a; 2b; 2c) definiert ist, die jeweils pro Nutzerausrüstung einen Abschwächungswert eines Signals, das von der Basisstation (2; 2a; 2b; 2c) ausgegeben und von der Nutzerausrüstung empfangen wird und, wenn die Nutzerausrüstung sich ebenfalls in wenigstens einer nicht dienenden Zelle befindet, einen Abschwächungswert eines Signals umfassen, das von der Basisstation der nicht dienenden Zelle ausgegeben und von der Nutzerausrüstung empfangen wird;
- Ausgehend von der empfangenen Gruppe von Abschwächungswerten die Bestimmung (E2) eines Wertes wenigstens eines Kontrollparameters ($\alpha$, $P_0$) der Ausgabeleistung; und
- Versand (E3) des Wertes des Kontrollparameters ($\alpha$, Po), der zur Anpassung der Ausgabeleistung der Nutzerausrüstungsgruppe bestimmt wurde, an die Nutzerausrüstungsgruppe, die von der Zelle (4a; 4b; 4c) bedient wird, die von der Basisstation (2; 2a; 2b; 2c) definiert wird;

- Für jede Nutzerausrüstung (5a.1, 5a.2, 5a.3, 5a.4; 5b.1, 5b.2, 5b:3; 5c.1, 5c.2), die von der Basisstation (2; 2a; 2b; 2c) bedient wird, die Berechnung des oder der Unterschiede(s) zwischen dem Abschwächungswert eines Signals, das von jeder Basisstation (2; 2a; 2b; 2c) der nicht dienenden Zellen (4a; 4b; 4c) der genannten Nutzerausrüstung ausgegeben wird und von der genannten Nutzerausrüstung empfangen wird, und dem Abschwächungswert eines Signals, das von der Basisstation (2; 2a; 2b; 2c) ausgegeben wird und von der genannten Nutzerausrüstung (5a.1, 5a.2, 5a.3, 5a.4; 5b.1, 5b.2, 5b.3; 5c.1, 5c.2) empfangen wir); wobei das genannte Verfahren dadurch durch gekennzeichnet ist, dass es die Schritte umfasst;

- Auswahl eines maximalen Abschwächungswertes $PL_{MAX}$ aus einer Gruppe von Abschwächungswerten wenigstens eines Signals, das von der Basisstation (2; 2a; 2b; 2c) ausgegeben und von jeder Nutzerausrüstungsgruppe (5a.1, 5a.2, 5a.3, 5a.4; 5b.1, 5b.2, 5b.3; 5c.1, 5c.2) empfangen wird, das von der Basisstation (2; 2a; 2b; 2c) bedient wird,

- Auswahl des Minimums $\Delta PL_{MIN}$ zwischen den Differenzwerten, die für alle Nutzerausrüstungen (5a.1, 5a.2, 5a.3, 5a.4; 5b.1, 5b.2, 5b.3; 5c.1, 5c.2) berechnet werden, die von der Basisstation (2, 2a; 2b; 2c) bedient werden,

- Berechnung eines Verhältnisses $SINR_{MIN}$ gemäß der Formel $SINR_{MIN} = SINR_0 + \Delta PL_{MIN}$, in der $SINR_0$ eine vorbestimmte Konstante ist,

- Berechnung eines Wertes eines ersten Kontrollparameters der Ausgabeleistung von Nutzerausrüstungen (5a.1, 5a.2, 5a.3, 5a.4; 5b.1, 5b.2, 5b.3; 5c.1, 5c.2), die von der Basisstation (2; 2a; 2b; 2c) gemäß der Formel

$$\alpha = 1 - \frac{SINR_{MIN} - SINR_{MAX}}{PL_{MIN} - \beta.PL_{MAX}}$$

bedient werden, in der $\beta$ ein vorbestimmter Korrekturkoeffizient ist, der der Basisstation (2; 2a; 2b; 2c) bekannt ist und in der $SINR_{MAX}$ und $PL_{MIN}$ vorbestimmte Konstanten sind,

- Berechnung eines Wertes eines zweiten Kontrollparameters der Ausgabeleistung von Nutzerausrüstungen (5a.1, 5a.2, 5a.3, 5a.4; 5b.1, 5b.2, 5b.3; 5c.1, 5c.2), die von der Basisstation (2; 2a; 2b; 2c) gemäß der Formel $P_0 = SINR_{MIN} + (1-\alpha)PL_{MAX} + N_{thermal}$,

bedient werden, in der $N_{thermal}$ eine vorbestimmte Konstante ist.

**2.** Verfahren gemäß dem voranstehenden Anspruch, **dadurch gekennzeichnet, dass** der Korrekturkoeffizient $\beta$ gleich 1 ist.

**3.** Bestimmungsverfahren wenigstens eines Parameterwertes für die Kontrolle der Ausgabeleistung einer Nutzerausrüstungsgruppe (5a.1, 5a.2, 5a.3, 5a.4; 5b.1, 5b.2, 5b.3; 5c.1, 5c.2), die von einer Zelle (4a; 4b; 4c) bedient wird, die von einer Basisstation (2; 2a; 2b; 2c) eines Zelltelefonnetzes (1) definiert wird, wobei das genannte Verfahren für die Basisstation (2; 2a; 2b; 2c) die Schritte umfasst:

- Empfang (E1) einer Gruppe von Abschwächungswerten seitens der Nutzerausrüstungsgruppe (5a.1, 5a.2, 5a.3, 5a.4; 5b.1, 5b.2, 5b.3; 5c.1, 5c.2), die sich in der Zelle (4a; 4b; 4c) befindet, die von der Basisstation (2; 2a; 2b; 2c) definiert wird, welche jeweils pro Nutzerausrüstung einen Abschwächungswert eines Signals, das von der Basisstation (2; 2a; 2b; 2c) ausgegeben und von der Nutzerausrüstung empfangen wird, und, wenn die Nutzerausrüstung sich ebenfalls in wenigstens einer nicht dienenden Zelle befindet, einen Abschwächungswert eines Signals umfassen, das von der Basisstation der nicht dienenden Zelle ausgegeben und von der Nutzerausrüstung empfangen wird;

- Ausgehend von der empfangenen Gruppe von Abschwächungswerten die Bestimmung (E2) eines Wertes von wenigstens einem Kontrollparameter ($\alpha$, $P_0$) der Ausgabeleistung; und

- Versand (E3) des Wertes des Kontrollparameters ($\alpha$, $P_0$), der für die Anpassung der Ausgabeleistung der Nutzerausrüstungsgruppe bestimmt wird, an die Nutzerausrüstungsgruppe, die von der Zelle (4a; 4b; 4c) bedient wird, welche von der Basisstation (2; 2a; 2b; 2c) definiert wird,

- Für jede Nutzerausrüstung (5a.1, 5a.2, 5a.3, 5a.4; 5b.1, 5b.2, 5b.3; 5c.1, 5c,2), die von der Basisstation (2; 2a; 2b; 2c) bedient wird, Berechnung der Differenz oder Differenzen zwischen dem Abschwächungswert eines Signals, das von jeder Basisstation (2; 2a; 2b; 2c) der nicht dienenden Zellen (4a; 4b; 4c) der genannten Nutzerausrüstung ausgegeben und von der genannten Nutzerausrüstung empfangen wird, und dem Abschwächungswert eines Signals, das von der Basisstation (2; 2a; 2b; 2c) ausgegeben und von der genannten Nutzerausrüstung (5a,1, 5a.2, 5a.3, 5a.4; 5b.1, 5b.2, 5b.3; 5c.1, 5c.2) empfangen wird;

wobei das genannte Verfahren **dadurch gekennzeichnet ist, dass** es die Schritte umfasst:

- Auswahl der k größten Abschwächungswerte aus einer Gruppe von Abschwächungswerten wenigstens eines Signals, das von der Basisstation (2; 2a; 2b; 2c) ausgegeben und von jeder Nutzerausrüstung (5a.1, 5a.2, 5a.3, 5a.4; 5b.1, 5b.2, 5b.3; 5c.1, 5c.2) empfangen wird, die von der Basisstation (2; 2a; 2b; 2c) bedient wird,
- Berechnung des durchschnittlichen Abschwächungswertes $PL_{AVG}$ der k größten ausgewählten Abschwächungswerte,
- Auswahl der k kleinsten berechneten Differenzen,
- Berechnung des Durchschnitts $\Delta PL_{AVG}$ der k ausgewählten Differenzen,
- Berechnung eines Verhältnisses $SINR_{MIN}$ gemäß der Formel $SINR_{MIN} = SINR_0 + \Delta PL_{AVG}$, in der $SINR_0$ eine vorbestimmte Konstante ist,
- Berechnung eines Wertes eines ersten Kontrollparameters der Ausgabeleistung der Nutzerausausrüstungen (5a.1, 5a.2, 5a.3, 5a.4; 5b.1, 5b.2, 5b.3; 5c.1, 5c.2), die von der Basisstation (2; 2a; 2b; 2c) bedient werden, gemäß der Formel:

$$\alpha = 1 - \frac{SINR_{MIN} - SINR_{MAX}}{PL_{MIN} - PL_{AVG}}$$

in der $SINR_{MAX}$ und $PL_{MIN}$ vorbestimmte Konstanten sind,

- Berechnung eines Wertes eines zweiten Kontrollparameters der Ausgabeleistung von Nutzerausrüstungen (5a.1, 5a.2, 5a.3, 5a.4; 5b.1, 5b.2, 5b.3; 5c.1, 5c.2), die von der Basisstation (2; 2a; 2b; 2c) gemäß der Formel

$$P_0 = SINR_{MIN} + (1-\alpha)\, PL_{AVG} + N_{thermal},$$

bedient werden, in der $N_{thermal}$ eine vorbestimmte Konstante ist.

**4.** Verfahren gemäß irgendeinem der Ansprüche 1 bis 3, umfassend darüber hinaus einen einleitenden Versandschritt einer Einholungsanfrage der Gruppe von Abschwächungswerten an die Nutzerausrüstungsgruppe (5a.1, 5a.2, 5a.3, 5a.4; 5b.1, 5b.2, 5b.3; 5c.1, 5c.2), die von der Zelle (4a; 4b; 4c) bedient wird, welche von der Basisstation (2; 2a; 2b; 2c) definiert wird, welche jeweils pro Nutzerausrüstung einen Abschwächungswert eines Signals umfassen, das von der Basisstation (2; 2a; 2b; 2c) ausgegeben und von der Nutzerausrüstung empfangen wird, und, wenn die Nutzerausrüstung sich ebenfalls in wenigsten einer nicht dienenden Zelle befindet, einen Abschwächungswert eines Signals umfassen, das von der Basisstation der nicht dienenden Zelle ausgegeben und von der Nutzerausrüstung empfangen wird.

**5.** Basisstation (2; 2a; 2b; 2c) für die Umsetzung des Verfahrens gemäß irgendeinem der Ansprüche 1 bis 2 oder dem Anspruch 4 in seiner Abhängigkeit von dem Anspruch 1 oder dem Anspruch 2, umfassen:

- ein Empfangsmodul, das konfiguriert ist, um seitens einer Nutzerausrüstungsgruppe (5a.1, 5a.2, 5a.3, 5a.4; 5b.1, 5b.2, 5b.3; 5c.1, 5c.2), die von der Zelle (4a; 4b; 4c) bedient wird, welche von der Basisstation (2; 2a; 2b; 2c) definiert wird, eine Gruppe von Abschwächungswerten zu empfangen, die jeweils pro Nutzerausrüstung einen Abschwächungswert eines Signals, das wenigstens von der Basisstation (2; 2a; 2b; 2c) ausgegeben und von der Nutzerausrüstung empfangen wird und, wenn die Nutzerausrüstung sich ebenfalls in einer nicht dienenden Zelle befindet, einen Abschwächungswert eines Signals umfassen, das von der Basisstation der nicht dienenden Zelle ausgegeben und von der Nutzerausrüstung empfangen wird;
- ein Bestimmungsmodul, das konfiguriert ist, um ausgehend von der empfangenen Gruppe von Abschwächungswerten einen Wert wenigstens eines Kontrollparameters der Ausgabeleistung zu bestimmen; und
- ein Ausgabemodul, das konfiguriert ist, um an die Nutzerausrüstungsgruppe (5a.1, 5a.2, 5a.3, 5a.4; 5b.1, 5b.2, 5b.3; 5c.1, 5c.2), die von der Zelle (4a; 4b; 4c) bedient wird, welche von der Basisstation (2; 2a; 2b; 2c) definiert wird, den Kontrollparameterwert zu senden, der bestimmt ist, um die Ausgabeleistung der Nutzerausrüstungsgruppe anzupassen; wobei die genannte Station umfasst:
- ein Auswahlmodul, das konfiguriert ist, um einen maximalen Abschwächungswert $PL_{MAXI}$ aus einer Gruppe von Abschwächungswerten wenigstens eines Signals auszuwählen, das von der Basisstation (2; 2a; 2b; 2c) ausgegeben wird und von jeder Nutzerausrüstung (5a.1, 5a.2, 5a.3, 5a.4; 5b.1, 5b.2, 5b.3; 5c.1, 5c.2) empfangen wird, die von der Basisstation (2; 2a; 2b; 2c) bedient wird;

- ein Berechnungsmodul, das konfiguriert ist, um für jede Nutzerausrüstung (5a.1, 5a.2, 5a.3, 5a.4; 5b.1, 5b.2, 5b.3; 5c.1, 5c.2), die von der Basisstation (2; 2a; 2b; 2c) bedient wird, die Differenz oder Differenzen zwischen dem Abschwächungswert eines Signals, das von jeder Basisstation (2; 2a; 2b; 2c) der nicht dienenden Zellen (4a; 4b; 4c) der genannten Nutzerausrüstung ausgegeben und von der genannten Nutzerausrüstung empfangen wird, und den Abschwächungswert eines Signals zu berechnen, das von der Basisstation (2; 2a; 2b; 2c) ausgegeben und von der genannten Nutzerausrüstung (5a.1, 5a.2, 5a.3, 5a.4; 5b.1, 5b.2, 5b.3; 5c.1, 5c.2) empfangen wird,

- ein Auswahlmittel, das konfiguriert ist, um ein Minimum $\Delta PL_{MIN}$ zwischen den Differenzwerten auszuwählen, die für alle Nutzerausrüstungen (5a.1, 5a.2, 5a.3, 5a.4; 5b.1, 5b.2, 5b.3, 5c.1, 5c.2) berechnet werden, die von der Basisstation (2; 2a; 2b; 2c) bedient werden,

- ein Berechnungsmittel, das konfiguriert ist, um ein Verhältnis $SINR_{MIN}$ gemäß der Formel $SINR_{MIN} = SINR_0 + \Delta PL_{MIN}$ zu berechnen, in der $SINR_0$ eine vorbestimmte Konstante ist,

- ein Berechnungsmittel, das konfiguriert ist, um einen Wert eines ersten Kontrollparameters der Ausgabeleistung der Nutzerausrüstungen (5a.1, 5a.2, 5a.3, 5a.4; 5b.1, 5b.2, 5b.3; 5c.1, 5c.2) zu berechnen, die von der Basisstation (2; 2a; 2b; 2c) gemäß der Formel

$$\alpha = 1 - \frac{SINR_{MIN} - SINR_{MAX}}{PL_{MIN} - \beta . PL_{MAX}}$$

bedient werden, in der $\beta$ ein vorbestimmter Korrekturkoeffizient ist, der der Basisstation (2, 2a; 2b; 2c) bekannt ist und in der $SINR_{MAX}$ und $PL_{MIN}$ vorbestimmte Konstanten sind,

- ein Berechnungsmittel, das konfiguriert ist, um einen Wert eines zweiten Kontrollparameters der Ausgabeleistung der Nutzerausrüstungen (5a.1, 5a.2, 5a.3, 5a.4; 5b.1, 5b.2, 5b.3; 5c.1, 5c.2) zu berechnen, die von der Basisstation (2; 2a; 2b; 2c) gemäß der Formel

$$P_0 = SINR_{MIN} + (1-\alpha) PL_{MAX} + N_{thermal}$$

bedient werden, in der $N_{thermal}$ eine vorbestimmte Konstante ist.

6. Basisstation (2; 2a; 2b; 2c) für die Umsetzung des Verfahrens gemäß Anspruch 3 oder Anspruch 4 in seiner Abhängigkeit von Anspruch 3, umfassend;

- ein Empfangsmodul, das konfiguriert ist, um seitens einer Nutzerausrüstungsgruppe (5a.1, 5a.2, 5a.3, 5a.4; 5b.1, 5b.2, 5b.3; 5c.1, 5c.2), die von der Zelle (4a; 4b; 4c) bedient wird, welche von der Basisstation (2; 2a; 2b; 2c) definiert wird, eine Gruppe von Abschwächungswerten zu empfangen, die jeweils pro Nutzerausrüstung einen Abschwächungswert eines Signals, das wenigstens durch die Basisstation (2; 2a; 2b; 2c) ausgegeben und von der Nutzerausrüstung empfangen wird, und, wenn die Nutzerausrüstung sich ebenfalls in wenigstens einer nicht dienenden Zelle befindet, einen Abschwächungswert eines Signals umfasst, das von der Basisstation der nicht dienenden Zelle ausgegeben und von der Nutzerausrüstung empfangen wird;

- ein Bestimmungsmodul, das konfiguriert ist, um ausgehend von der empfangenen Gruppe von Abschwächungswerten einen Wert wenigstens eines Kontrollparameters der Ausgabeleistung zu bestimmen; und

- ein Sendemodul, das konfiguriert ist, um an die Nutzerausrüstungsgruppe (5a.1, 5a.2, 5a.3, 5a.4; 5b.1, 5b.2, 5b.5; 5c.1, 5c.2), die von der Zelle (4a; 4b; 4c) bedient wird, welche von der Basisstation (2; 2a; 2b; 2c) definiert wird, den Kontrollparameterwert zu senden, der bestimmt ist, um die Ausgabeleistung der Nutzerausrüstungsgruppe anzupassen; wobei die genannte Station umfasst:

- ein Auswahlmodul, das konfiguriert ist, um die k größten Abschwächungswerte aus einer Gruppe von Abschwächungswerten wenigstens eines Signals auszuwählen, das von der Basisstation (2; 2a; 2b; 2c) ausgegeben und von jeder Nutzerausrüstungsgruppe (5a.1, 5a.2, 5a.3, 5a.4; 5b.1, 5b.2, 5b.3; 5c.1, 5c.2) empfangen wird, die von der Basisstation (2, 2a; 2b; 2c) bedient wird;

- ein Berechnungsmodul, das konfiguriert ist, um den durchschnittlichen Abschwächungswert $PL_{AVG}$ der ausgewählten größten k Abschwächungswerte zu berechnen,

- ein Berechnungsmodul, das konfiguriert ist, um für jede Nutzerausrüstung (5a.1, 5a.2, 5a.3, 5a.4; 5b.1, 5b.2, 5b.3; 5c.1, 5c.2), die von der Basisstation (2; 2a; 2b; 2c) bedient wird, die Differenz oder Differenzen zwischen dem Abschwächungswert eines Signals, das von jeder Basisstation (2; 2a; 2b; 2c) der nicht dienenden Zellen (4a; 4b; 4c) der genannten Nutzerausrüstung ausgegeben und von der genannten Nutzerausrüstung empfangen wird, und dem Abschwächungswert eines Signals, das von der Basisstation (2; 2a; 2b; 2c) ausgegeben und von der genannten Nutzerausrüstung (5a.1, 5a.2, 5a.3, 5a.4; 5b.1, 5b.2, 5b.3; 5c.1, 5c.2) empfangen wird, zu berechnen

- ein Auswahlmodul, das konfiguriert ist, um k kleinere, berechnete Differenzen auszuwählen,

- ein Berechnungsmodul, das konfiguriert ist, um den Durchschnitt $\Delta PL_{AVG}$ der k ausgewählten Differenzen zu berechnen,

- ein Berechnungsmodul, das konfiguriert ist um ein Verhältnis $SINR_{MIN}$ gemäß der Formel $SINR_{MIN} = SINR_0 + \Delta PL_{AVG}$ zu berechnen, in der $SINR_0$ eine vorbestimmte Konstante ist,

- ein Berechnungsmodul, das konfiguriert ist, um einen Wert eines ersten Kontrollparameters der Ausgabeleistung der Nutzerausrüstungen (5a.1, 5a.2, 5a.3, 5a.4; 5b.1, 5b.2, 5b.3; 5c.1, 5c.2) zu berechnen, die von der Basisstation (2; 2a; 2b; 2c) gemäß der Formel

$$\alpha = 1 - \frac{SINR_{MIN} - SINR_{MAX}}{PL_{MIN} - PL_{AVG}}$$

bedient werden, in de $SINR_{MAX}$ und $PL_{MIN}$ vorbestimmte Konstanten sind,

- ein Berechnungsmodul, das konfiguriert ist, um einen Wert eines zweiten Kontrollparameters der Ausgabeleistung der Nutzerausrüstungen (5a.1, 5a.2, 5a.3, 5a.4; 5b.1, 5b.2, 5b.3; 5c.1, 5c.2) zu berechnen, die von der Basisstation (2; 2a; 2b; 2c) gemäß der Formel

$$P_0 = SINR_{MIN} + (1-\alpha) PL_{AVG} + N_{thermal}$$

bedient werden, in der $N_{thermal}$ eine vorbestimmt Konstante ist.

7. Von einem Computer lesbarer Träger, der die von dem Computer ausführbare Anweisungen speichert und deren Ausführung die Umsetzung des Prozesses gemäß irgendeinem der Ansprüche 1 bis 4 zulässt.

8. Zelltelefonnetz für die Umsetzung des Verfahrens gemäß Anspruch 1, **dadurch gekennzeichnet, dass** es umfasst:

- wenigstens eine Basisstation (2; 2a; 2b; 2c) gemäß Anspruch 5;
- eine Nutzerausrüstungsgruppe (5a.1, 5a.2, 5a.3, 5a.4; 5b.1, 5b.2, 5b.3; 5c.1, 5c.2), die von der Zelle (4a; 4b; 4c) der Basisstation (2; 2a; 2b; 2c) bedient wird, wobei die Nutzerausrüstungsgruppe wenigstens eine Nutzerausrüstung umfasst, die konfiguriert ist um
- Signale der Basisstation und eventuell der benachbarten Basisstationen (2; 2a; 2b; 2c) zu empfangen,
- wenigstens einen Abschwächungswert ausgehend von den empfangenen Signalen zu bestimmten,
- den an der Basisstation (2; 2a; 2b; 2c) bestimmten Abschwächungswert zu senden,
- einen Kontrollparameterwert seiner Ausgabeleistung zu empfangen und
- seine Ausgabeleistung ausgehend von dem empfangenen Kontrollparameterwert anzupassen.

9. Zelltelefonnetz für die Umsetzung des Verfahrens gemäß Anspruch 3, **dadurch gekennzeichnet, dass** es umfasst:

- wenigstens eine Basisstation (2; 2a; 2b; 2c) gemäß Anspruch 6;
- eine Nutzerausrüstungsgruppe (5a.1, 5a.2, 5a.3, 5a.4; 5b.1, 5b.2, 5b.3; 5c.1, 5c.2), die von der Zelle (4a; 4b; 4c) der Basisstation (2; 2a; 2b; 2c) bedient wird, wobei die Nutzerausrüstungsgruppe wenigstens eine Nutzerausrüstung umfasst, die konfiguriert ist, um:
- Signale der Basisstation und eventuell der benachbarten Basisstationen (2; 2a; 2b; 2c) zu empfangen,
- die Bestimmung wenigstens eines Abschwächungswertes ausgehend von den empfangenen Signalen;
- den Versand des an der Basisstation (2; 2a; 2b; 2c) bestimmten Abschwächungswerte,
- den Empfang eines Kontrollparameterwertes der Ausgabeleistung und
- die Anpassung seiner Ausgabeleistung ausgehend von dem empfangenen Kontrollparameterwert.

**Claims**

1. A method for determining at least one parameter value for controlling the transmission power of a set of user equipment (5a.1, 5a.2, 5a.3, 5a.4; 5b.1, 5b.2, 5b.3; 5c.1, 5c.2) served by a cell (4a; 4b; 4c) defined by a base station (2; 2a; 2b; 2c) of a cellular telecommunication network (1), said method comprising, for the base station (2; 2a; 2b; 2c), the steps of:

   - receiving (E1), from the set of user equipment (5a.1, 5a.2, 5a.3, 5a.4; 5b.1, 5b.2, 5b.3; 5c.1, 5c.2) located in the cell (4a; 4b; 4c) defined by the base station (2; 2a; 2b; 2c), a set of attenuation values respectively comprising by piece of user equipment a attenuation value of a signal transmitted by the base station (2; 2a; 2b; 2c) and received by the piece of user equipment and, if the piece of user equipment is also located in at least one serving cell, an attenuation value of a signal transmitted by the base station of the non-serving cell and received by the piece of user equipment;
   - determining (E2), from the set of attenuation values received, a value of at least one control parameter ($\alpha$, $P_0$) of the transmission power; and
   - sending (E3), to the set of user equipment served by the cell (4a; 4b; 4c) defined by the base station (2; 2a; 2b; 2c), the control parameter value ($\alpha$, $P_0$) determined to match the transmission power of the set of user equipment;
   - calculating, for each piece of user equipment (5a.1, 5a.2, 5a.3, 5a.4; 5b.1, 5b.2, 5b.3; 5c.1, 5c.2) served by the base station (2; 2a; 2b; 2c), the difference(s) between the attenuation value of a signal transmitted by each of the base stations (2; 2a; 2b; 2c) of the non-serving cells (4a; 4b; 4c) of said piece of user equipment and received by said piece of user equipment and the attenuation value of a signal transmitted by the base station (2; 2a; 2b; 2c) and received by said piece of user equipment (5a.1, 5a.2, 5a.3, 5a.4; 5b.1, 5b.2, 5b.3; 5c.1, 5c.2);

   said method being **characterised in that** it comprises the steps of:

   - selecting a maximum attenuation value $PL_{MAX}$ from a set of attenuation values of at least one signal transmitted by the base station (2; 2a; 2b; 2c) and received by each piece of user equipment (5a.1, 5a.2, 5a.3, 5a.4; 5b.1, 5b.2, 5b.3; 5c.1, 5c.2) served by the base station (2; 2a; 2b; 2c),
   - selecting the minimum $\Delta PL_{MIN}$ between the values of differences calculated for all the user equipment (5a.1, 5a.2, 5a.3, 5a.4; 5b.1, 5b.2, 5b.3; 5c.1, 5c.2) served by the base station (2; 2a; 2b; 2c),
   - calculating a ratio $SINR_{MIN}$ according to the formula $SINR_{MIN} = SINR_0 + \Delta PL_{MIN}$, where $SINR_0$ is a predetermined constant,
   - calculating a value of a first control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$\alpha = 1 - \frac{SINR_{MIN} - SINR_{MAX}}{PL_{MIN} - \beta . PL_{MAX}},$$

   where $\beta$ is a known predetermined correction coefficient of the base station (2; 2a; 2b; 2c) and where $SINR_{MAX}$ and $PL_{MIN}$ are predetermined constants,
   - calculating a value of a second control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$P_0 = SINR_{MIN} + (1 - \alpha) PL_{MAX} + N_{thermal},$$

   where $N_{thermal}$ is a predetermined constant.

2. The method according to the preceding claim, **characterised in that** the correction coefficient $\beta$ is 1.

3. The method for determining at least one parameter value for controlling the transmission power of a set of user equipment (5a.1, 5a.2, 5a.3, 5a.4; 5b.1, 5b.2, 5b.3; 5c.1, 5c.2) served by a cell (4a; 4b; 4c) defined by a base station (2; 2a; 2b; 2c) of a cellular telecommunication network (1), said method comprising, for the base station (2; 2a; 2b; 2c), the steps of:

- receiving (E1), from the set of user equipment (5a.1, 5a.2, 5a.3, 5a.4; 5b.1, 5b.2, 5b.3; 5c.1, 5c.2) located in the cell (4a; 4b; 4c) defined by the base station (2; 2a; 2b; 2c), a set of attenuation values respectively comprising by piece of user equipment an attenuation value of a signal transmitted by the base station (2; 2a; 2b; 2c) and received by the piece of user equipment and, if the piece of user equipment is also located in at least one non-serving cell, an attenuation value of a signal transmitted by the base station of the non-serving cell and received by the piece of user equipment;

- determining (E2), from the set of attenuation values received, a value of at least one control parameter ($\alpha$, $P_0$) of the transmission power; and

- sending (E3), to the set of user equipment served by the cell (4a; 4b; 4c) defined by the base station (2; 2a; 2b; 2c), the control parameter value ($\alpha$, $P_0$) determined to match the transmission power of the set of user equipment;

- calculating, for each piece of user equipment (5a.1, 5a.2, 5a.3, 5a.4; 5b.1, 5b.2, 5b.3; 5c.1, 5c.2) served by the base station (2; 2a; 2b; 2c), the difference(s) between the attenuation value of a signal transmitted by each of the base stations (2; 2a; 2b; 2c) of the non-serving cells (4a; 4b; 4c) of said piece of user equipment and received by said piece of user equipment and the attenuation value of a signal transmitted by the base station (2; 2a; 2b; 2c) and received by said piece of user equipment (5a.1, 5a.2, 5a.3, 5a.4; 5b.1, 5b.2, 5b.3; 5c.1, 5c.2);

said method being **characterised in that** it comprises the steps of:

- selecting the k greatest attenuation values from a set of attenuation values of at least one signal transmitted by the base station (2; 2a; 2b; 2c) and received by each piece of user equipment (5a.1, 5a.2, 5a.3, 5a.4; 5b.1, 5b.2, 5b.3; 5c.1, 5c.2) served by the base station (2; 2a; 2b; 2c),

- calculating the average attenuation value $PL_{AVG}$ of the k greatest attenuation values selected,

- selecting the k smallest differences calculated,

- calculating the average $\Delta PL_{AVG}$ of the k differences selected,

- calculating a ratio $SINR_{MIN}$ according to the formula $SINR_{MIN} = SINR_0 + \Delta PL_{AVG}$, where $SINR_0$ is a predetermined constant,

- calculating a value of a first control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$\alpha = 1 - \frac{SINR_{MIN} - SINR_{MAX}}{PL_{MIN} - PL_{AVG}},$$

where $SINR_{MAX}$ and $PL_{MIN}$ are predetermined constants,

- calculating a value of a second control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$P_0 = SINR_{MIN} + (1 - \alpha)\, PL_{AVG} + N_{thermal},$$

where $N_{thermal}$ is a predetermined constant.

**4.** The method according to one of claims 1 to 3, further comprising a prior step of sending, to the set of user equipment (5a.1, 5a.2, 5a.3, 5a.4; 5b.1, 5b.2, 5b.3; 5c.1, 5c.2) served by the cell (4a; 4b; 4c) defined by the base station (2; 2a; 2b; 2c), a request for obtaining the set of attenuation values respectively comprising by piece of user equipment an attenuation value of a signal transmitted by the base station (2; 2a; 2b; 2c) and received by the piece of user equipment and, if the piece of user equipment is also located in at least one non-serving cell, an attenuation value of a signal transmitted by the base station of the non-serving cell and received by the piece of user equipment.

**5.** A base station (2; 2a; 2b; 2c), for implementing the method according to one of claims 1 to 2 or claim 4 when dependant on claim 1 or claim 2 comprising:

- a receiving module configured to receive, from a set of user equipment (5a.1, 5a.2, 5a.3, 5a.4; 5b.1, 5b.2, 5b.3; 5c.1, 5c.2) served by the cell (4a; 4b; 4c) defined by the base station (2; 2a; 2b; 2c), a set of attenuation values respectively comprising by piece of user equipment an attenuation value of a signal transmitted by at least the base station (2; 2a; 2b; 2c) and received by the piece of user equipment and, if the piece of user equipment is also located in at least one non-serving cell, an attenuation value of a signal transmitted by the base station of the non-serving cell and received by the piece of user equipment;

- a determining module configured to determine, from the set of attenuation values received, a value of at least one control parameter of the transmission power; and

- a transmitting module configured to send, to the set of user equipment (5a.1, 5a.2, 5a.3, 5a.4; 5b.1, 5b.2, 5b.3; 5c.1, 5c.2) served by the cell (4a; 4b; 4c) defined by the base station (2; 2a; 2b; 2c), the control parameter value determined to match the transmission power of the set of user equipment;

said station comprising:

- a selecting module configured to select a maximum attenuation value $PL_{MAX}$ from a set of attenuation values of at least one signal transmitted by the base station (2; 2a; 2b; 2c) and received by each piece of user equipment (5a.1, 5a.2, 5a.3, 5a.4; 5b.1, 5b.2, 5b.3; 5c.1, 5c.2) served by the base station (2; 2a; 2b; 2c),

- a calculating module configured to calculate, for each piece of user equipment (5a.1, 5a.2, 5a.3, 5a.4; 5b.1, 5b.2, 5b.3; 5c.1, 5c.2) served by the base station (2; 2a; 2b; 2c), the difference(s) between the attenuation value of a signal transmitted by each of the base stations (2; 2a; 2b; 2c) of the non-serving cells (4a; 4b; 4c) of the said piece of user equipment and received by said piece of user equipment and the attenuation value of a signal transmitted by the base station (2; 2a; 2b; 2c) and received by said piece of user equipment (5a.1, 5a.2, 5a.3, 5a.4; 5b.1, 5b.2, 5b.3; 5c.1, 5c.2),

- a selecting means configured to select a minimum $\Delta PL_{MIN}$ between the values of differences calculated for all the user equipment (5a.1, 5a.2, 5a.3, 5a.4; 5b.1, 5b.2, 5b.3; 5c.1, 5c.2) served by the base station (2; 2a; 2b; 2c),

- a calculating means configured to calculate a ratio $SINR_{MIN}$ according to the formula $SINR_{MIN} = SINR_0 + \Delta PL_{MIN}$, where $SINR_0$ is a predetermined constant,

- a calculating means configured to calculate a value of a first control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$\alpha = 1 - \frac{SINR_{MIN} - SINR_{MAX}}{PL_{MIN} - \beta . PL_{MAX}},$$

where $\beta$ is a known predetermined correction coefficient of the base station (2; 2a; 2b; 2c) and where $SINR_{MAX}$ and $PL_{MIN}$ are predetermined constants,

- a calculating means configured to calculate a value of a second control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$P_0 = SINR_{MIN} + (1 - \alpha) PL_{MAX} + N_{thermal},$$

where $N_{thermal}$ is a predetermined constant.

6. A base station (2; 2a; 2b; 2c), for implementing the method according to claim 3 or claim 4 when dependant on claim 3 comprising:

- a receiving module configured to receive, from a set of user equipment (5a.1, 5a.2, 5a.3, 5a.4; 5b.1, 5b.2, 5b.3; 5c.1, 5c.2) deserved by the cell (4a; 4b; 4c) defined by the base station (2; 2a; 2b; 2c), a set of attenuation values respectively comprising by piece of user equipment an attenuation value of a signal transmitted by at least the base station (2; 2a; 2b; 2c) and received by the piece of user equipment and, if the piece of user equipment is also located in at least one non-serving cell, an attenuation value of a signal transmitted by the base station of the non-serving cell and received by the piece of user equipment;

- a determining module configured to determine, from the set of attenuation values received, a value of at least one control parameter of the transmission power; and

- a transmitting module configured to send, to the set of user equipment (5a.1, 5a.2, 5a.3, 5a.4; 5b.1, 5b.2, 5b.3; 5c.1, 5c.2) served by the cell (4a; 4b; 4c) defined by the base station (2; 2a; 2b; 2c), the control parameter value determined to match the transmission power of the set of user equipment;

said station comprising:

- a selecting module configured to select the k greatest attenuation values from an set of attenuation values of at least one signal transmitted by the base station (2; 2a; 2b; 2c) and received by each piece of user equipment (5a.1, 5a.2, 5a.3, 5a.4; 5b.1, 5b.2, 5b.3; 5c.1, 5c.2) served by the base station (2; 2a; 2b; 2c),
- a calculating module configured to calculate the average attenuation value $PL_{AVG}$ of the k greatest attenuation values selected,
- a calculating module configured to calculate, for each piece of user equipment (5a.1, 5a.2, 5a.3, 5a.4; 5b.1, 5b.2, 5b.3; 5c.1, 5c.2) served by the base station (2; 2a; 2b; 2c), the difference(s) between the attenuation value of a signal transmitted by each of the base stations (2; 2a; 2b; 2c) of the non-serving cells (4a; 4b; 4c) of said piece of user equipment and received by said piece of user equipment and the attenuation value of a signal transmitted by the base station (2; 2a; 2b; 2c) and received by said piece of user equipment (5a.1, 5a.2, 5a.3, 5a.4; 5b.1, 5b.2, 5b.3; 5c.1, 5c.2),
- a selecting module configured to select the k smallest differences calculated,
- a calculating module configured to calculate the average $\Delta PL_{AVG}$ of the k differences selected,
- a calculating module configured to calculate a ratio $SINR_{MIN}$ according to the formula $SINR_{MIN} = SINR_0 + \Delta PL_{AVG}$, where $SINR_0$ is a predetermined constant,
- a calculating module configured to calculate a value of a first control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$\alpha = 1 - \frac{SINR_{MIN} - SINR_{MAX}}{PL_{MIN} - PL_{AVG}},$$

where $SINR_{MAX}$ and $PL_{MIN}$ are predetermined constants,
- a calculating module configured to calculate a value of a second control parameter of the transmission power of the user equipment (5a.1, 5a.2, 5a.3, 5a.4; 5b.1, 5b.2, 5b.3; 5c.1, 5c.2) served by the base station (2; 2a; 2b; 2c) according to the formula:

$$P_0 = SINR_{MIN} + (1 - \alpha) PL_{AVG} + N_{thermal},$$

where $N_{thermal}$ is a predetermined constant.

7. A computer readable medium storing instructions executable by the computer and the execution of which allows the method according to one of claims 1 to 4 to be implemented.

8. A cellular telecommunication network, for implementing the method according to claim 1, **characterised in that** it comprises:

- at least one base station (2; 2a; 2b; 2c) according to claim 5;
- a set of user equipment (5a.1, 5a.2, 5a.3, 5a.4; 5b.1, 5b.2, 5b.3; 5c.1, 5c.2) served by the cell (4a; 4b; 4c) of the base station (2; 2a; 2b; 2c), the set of user equipment comprising at least one piece of user equipment configured to:

  - receive signals from the base station and optionally from the neighbouring base stations (2; 2a; 2b; 2c),
  - determine at least one attenuation value from the signals received,
  - send the attenuation value determined to the base station (2; 2a; 2b; 2c),
  - receive a control parameter value of its transmission power, and
  - match its transmission power from the control parameter value received.

9. A cellular telecommunication network, for implementing the method according to claim 3, **characterised in that** it comprises:

- at least one base station (2; 2a; 2b; 2c) according to claim 6;
- a set of user equipment (5a.1, 5a.2, 5a.3, 5a.4; 5b.1, 5b.2, 5b.3; 5c.1, 5c.2) served by the cell (4a; 4b; 4c) of the base station (2; 2a; 2b; 2c), the set of user equipment comprising at least one piece of user equipment configured to:
- receive signals from the base station and optionally from the neighbouring base stations (2; 2a; 2b; 2c),
- determine at least one attenuation value from the signals received,
- send the attenuation value determined to the base station (2; 2a; 2b; 2c),
- receive a control parameter value of its transmission power, and
- match its transmission power from the control parameter value received.

## FIG. 1

## FIG. 2

| | |
|---|---|
| Module de réception | 22 |
| Module de détermination | 24 |
| Module d'émission | 26 |

2

## FIG. 3

| | |
|---|---|
| RECEPTION | E1 |

| | | |
|---|---|---|
| Sélection PL$_{MAX}$ | E21 | E2 |
| Calcul $\Delta$PL | E22 | |
| Sélection $\Delta$PL$_{MIN}$ | E23 | |
| Calcul SINR$_{MIN}$ | E24 | |
| Calcul $\alpha$ | E25 | |
| Calcul P$_0$ | E26 | |
| DETERMINATION | | |

| | |
|---|---|
| ENVOI | E3 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2101418 A

- US 20120322494 A